# NEUE EUROPÄISCHE PATENTSCHRIFT

(11) **EP 2 754 594 B2**
(45) Veröffentlichungstag und Bekanntmachung des Hinweises auf die Entscheidung über den Einspruch: **21.08.2019**
(45) Hinweis auf die Patenterteilung: 27.07.2016
(21) Anmeldenummer: 14000054.8
(22) Anmeldetag: 08.01.2014
(51) Int. Cl.: B60T 13/26, B60T 17/02

(54) **Verfahren und Vorrichtung zur Steuerung einer Druckluft-Bremsanlage eines Fahrzeuggespanns**
Method and device for controlling a compressed air braking system of a vehicle combination
Procédé et dispositif de commande d'une installation de freinage à air comprimé d'un train de véhicule automobile

(30) Priorität: 09.01.2013 DE 102013000275
(43) Veröffentlichungstag der Anmeldung: 16.07.2014
(73) Patentinhaber: WABCO GmbH, 30453 Hannover (DE)
(72) Erfinder: Diekmeyer, Heinrich, 30890 Barsinghausen (DE); Feyerabend, Konrad, 30625 Hannover (DE)

(56) Entgegenhaltungen:
- EP-A1- 0 119 505
- DE-A1- 19 913 248
- DE-A1- 19 913 726
- DE-A1-102008 056 322
- DE-A1-102009 017 903
- HANS-PETER KLUG:: "Nutzfahrzeug-Bremsanlagen", KRAFTFAHRZEUGTECHNIK, XP055376632,

## Beschreibung

Die Erfindung betrifft ein Verfahren zur Steuerung einer Druckluft-Bremsanlage eines Fahrzeuggespanns, das aus einem Motorwagen und wenigstens einem Anhänger besteht, mit einer in dem Motorwagen angeordneten Druckluft-Versorgungseinrichtung, an die über ein Mehrkreis-Schutzventil zumindest ein nicht druckbegrenzter Motorwagen-Bremskreis und ein druckbegrenzter Anhänger-Bremskreis angeschlossen sind, wobei der Anhänger-Bremskreis im Motorwagen eine zwischen dem betreffenden Anschluss des Mehrkreis-Schutzventils und einem motorwagenseitig ersten Kupplungskopf angeordnete Vorratsleitung mit oder ohne einem Vorratsbehälter sowie einen dieser Vorratsleitung oder diesem Vorratsbehälter nachgeschalteten Abzweig zu einem Handbremsventil aufweist, und im Anhänger eine zwischen einem anhängerseitig ersten Kupplungskopf sowie Betriebsbremszylindern der Radbremsen angeordnete Vorratsleitung mit einem Anhänger-Bremsventil und einem diesem nachgeordneten Vorratsbehälter aufweist. Außerdem betrifft die Erfindung eine Vorrichtung und ein Steuerungsgerät, welche zur Durchführung des Verfahrens bestimmt und ausgebildet sind.

Bestimmte Kraftfahrzeuge, insbesondere schwere Lastkraftwagen und Omnibusse, sind üblicherweise mit einer Druckluft-Bremsanlage und gegebenenfalls zusätzlich auch mit einer Luftfederungsanlage ausgerüstet. Diese verfügen über eine Versorgungseinrichtung zur Erzeugung, Trocknung und Speicherung von Druckluft. Bei modernen Fahrzeuggespannen, die aus einem Motorwagen, d.h. einem motorisierten Zugfahrzeug, und einem Anhänger, wie beispielsweise einem Deichselanhänger oder einem Sattelanhänger, bestehen, umfasst die Druckluft-Bremsanlage üblicherweise zwei nicht druckbegrenzte Motorwagen-Bremskreise und einen druckbegrenzten Anhänger-Bremskreis, die über ein Mehrkreis-Schutzventil an die im Motorwagen angeordnete Druckluft-Versorgungseinrichtung angeschlossen sind.

Die Druckluft-Versorgungseinrichtung weist einen von dem Antriebsmotor des Motorwagens antreibbaren Kompressor auf, mittels dem Luft aus der Atmosphäre angesaugt und als Druckluft über ein Rückschlagventil sowie einen Trockner in eine eingangsseitig mit dem Mehrkreis-Schutzventil verbundene Druckleitung gefördert werden kann. Die Förderung der Druckluft erfolgt üblicherweise bedarfsgesteuert, indem der Kompressor bei Unterschreitung eines vorab festgelegten unteren Druckgrenzwertes in der Druckleitung eingeschaltet und bei Überschreitung eines vorab festgelegten oberen Druckgrenzwertes in der Druckleitung abgeschaltet wird. Die Steuerung der Drucklufterzeugung und Druckluftverteilung sowie die Regeneration eines Lufttrockners erfolgt beispielsweise mittels eines elektronischen Steuerungsgeräts, in dem entsprechende Steuerungs- und Regelungsprogramme abgespeichert sind.

Das Ein- und Abschalten des Kompressors kann bekanntlich dadurch erfolgen, dass der Druckausgang des Kompressors mittels eines Umschaltventils wechselweise mit der Druckleitung oder mit der Atmosphäre verbunden wird. In diesem Fall wird der Kompressor permanent von dem Antriebsmotor angetrieben. Alternativ dazu kann das Ein- und Abschalten des Kompressors auch dadurch erfolgen, dass der Kompressor über eine schaltbare Trennkupplung wechselweise mit dem Antriebsmotor gekoppelt oder von diesem abgekoppelt wird. Auch bei dieser Ausführungsform ist der Druckausgang des Kompressors permanent mit der Druckleitung verbunden. Da der Antrieb des Kompressors durch das dafür von dem Antriebsmotor aufzubringende Antriebsmoment zwangsläufig mit einer Erhöhung des Kraftstoffverbrauchs und einer Verringerung der für den Antrieb des Kraftfahrzeugs verfügbaren Antriebsleistung des Antriebsmotors verbunden ist, sind bereits mehrere Verfahren und Vorrichtungen zur Vermeidung oder Abschwächung dieser Nachteile vorgeschlagen worden.

DE 10 2009 017 903 A1 offenbart eine Druckluftversorgungseinrichtung der zur Zufuhr von Druckluft zu dem Druckluftreservoir verbunden ist. Es ist vorgesehen, dass die Druckluftversorgungseinrichtung eine Druckluftsteuereinrichtung aufweist, welche eine Zufuhr von Druckluft von dem Kompressor zu dem Druckluftreservoir zu steuern vermag und die ferner dazu eingerichtet ist, einen Betriebszustand Schubphase des Fahrzeugs zu erfassen.

So ist beispielsweise aus der EP 0 119 505 A1 eine Druckluft-Versorgungseinrichtung einer Druckluft-Bremsanlage bekannt, bei welcher der Kompressor außer bei Unterschreitung eines vorgegebenen unteren Druckgrenzwertes auch im Schubbetrieb des Antriebsmotors und bei einer Betätigung der Betriebsbremse eingeschaltet wird. Das druckunabhängige Einschalten des Kompressors erfolgt über die Betätigung eines zusätzlichen Magnetschaltventils, das bei losgelassenem Gaspedal, Überschreitung einer Mindestdrehzahl des Antriebsmotors, und geschlossener Kupplung oder bei betätigtem Bremspedal über elektrische Schalter umgeschaltet wird. Hierdurch wird erreicht, dass die Energie zum Antrieb des Kompressors bevorzugt im Schubbetrieb und in Bremsphasen aus der kinetischen Energie des Kraftfahrzeugs entnommen und weniger häufig der durch die Verbrennung von Kraftstoff erzeugten Antriebsenergie des Antriebsmotors entzogen wird.

In der EP 0 335 086 B1 wird eine Steuereinrichtung eines Kraftfahrzeugs, insbesondere eines Lastkraftwagens oder Omnibusses, vorgeschlagen, mit der bei einem erkannten Wechsel von Zugbetrieb auf Schubbetrieb des Antriebsmotors eine gezielte Zuschaltung von Antriebsaggregaten zur Ladung der Energiespeicher von Nebenverbrauchern erfolgt, darunter auch des Kompressors zur Ladung der Vorratsspeicher einer Druckluft-Bremsanlage. Die Reihenfolge der Zuschaltung der Antriebsaggregate ist durch eine Prioritätenwahlschaltung festgelegt, wobei der Druckluft-Bremsanlage die höchste Priorität zugeordnet ist, weshalb der Kompressor der Druckluft-Bremsanlage zuerst zugeschaltet wird.

In der WO 1998/07 588 A1 sind eine Vorrichtung und ein Verfahren zur Steuerung des Kompressors einer Druckluftanlage eines Kraftfahrzeugs beschrieben, bei denen der von dem Antriebsmotor angetriebene Kompressor bei Erreichen eines ersten Druckgrenzwertes in der Druckluftanlage abgeschaltet wird, wenn eine bestimmte Betriebsbedingung nicht erfüllt ist, und bei Erreichen eines höheren zweiten Druckgrenzwertes in der Druckluftanlage abgeschaltet wird, wenn die Betriebsbedingung erfüllt ist. Die Betriebsbedingung ist unter anderem dann erfüllt, wenn die aktuelle Fahrgeschwindigkeit eine vorgegebene Grenzgeschwindigkeit überschreitet und der aktuelle Kraftstoffverbrauch einen vorgegebenen Mindestverbrauchswert unterschreitet, wodurch ein Schubbetrieb des Kraftfahrzeugs erkannt wird. Somit werden die Druckspeicher der Druckluftanlage im Schubbetrieb des Kraftfahrzeugs auf ein höheres Druckniveau geladen als im normalen Fahrbetrieb, wodurch der Kraftstoffverbrauch des Antriebsmotors gesenkt werden kann.

Aus der DE 199 13 248 B4 sind eine Vorrichtung und ein Verfahren zur Steuerung des Kompressors einer Druckluftanlage eines Kraftfahrzeugs bekannt, bei denen der Kompressor bei Unterschreitung eines unteren Druckgrenzwertes in der Druckluftanlage und bei erkannter Bergabfahrt eingeschaltet sowie bei Überschreitung eines oberen Druckgrenzwertes in der Druckluftanlage und bei Erreichen eines vorgegebenen Temperaturgrenzwertes am Kompressorkopf des Kompressors abgeschaltet wird. Die Kopftemperatur des Kompressors kann entweder sensorisch erfasst oder anhand der Betriebsdauer des Kompressors abgeschätzt werden. Um eine thermische Überlastung des Kompressors zu vermeiden, wird dieser daher nach Erreichen des Temperaturgrenzwertes am Kompressorkopf oder nach Erreichen einer vorgegebenen Betriebsdauer abgeschaltet.

In der EP 1 183 172 B2 ist eine Vorrichtung zur Steuerung einer Druckluft-Bremsanlage eines Kraftfahrzeugs beschrieben, bei welcher der durch den Kompressor in einem nachgeschalteten Vorratsbehälter einzustellende Solldruck abhängig von dem aktuellen Betriebszustand des Kraftfahrzeugs und des Kompressors variiert wird. So ist bei dieser Vorrichtung vorgesehen, dass der Solldruck bei Fahrzeugstillstand und bei erhöhter Temperatur der am Druckausgang des Kompressors austretenden Druckluft gegenüber dem Solldruck für den normalen Fahrbetrieb abgesenkt wird, und dass der Solldruck bei gedrosselter Kraftstoffzufuhr zum Antriebsmotor, durch den ein Schub- oder Bremsbetrieb erkannt wird, gegenüber dem Solldruck für den normalen Fahrbetrieb um etwa 10% erhöht wird. Auch hierdurch kann eine Reduzierung des Kraftstoffverbrauchs des Antriebsmotors erreicht und eine thermische Überlastung des Kompressors vermieden werden.

Schließlich ist aus der EP 0 827 470 B1 eine Druckluftanlage eines Kraftfahrzeugs bekannt, bei der zumindest einige der über ein Mehrkreis-Schutzventil an die Druckluft-Versorgungseinrichtung angeschlossenen Verbraucherkreise jeweils über ein ansteuerbares Sperrglied von der Druckluft-Versorgungseinrichtung und den übrigen Verbraucherkreisen abtrennbar sind. Das jeweilige Sperrglied kann als ein elektrisch ansteuerbares 2/2-Wege-Magnetschaltventil oder als ein über ein Vorschaltventil pneumatisch ansteuerbares 2/2-Wege-Druckschaltventil ausgebildet sein, das in Strömungsrichtung vor oder nach dem Mehrkreis-Schutzventil angeordnet und im unbetätigten Zustand geöffnet ist. Alternativ dazu kann das jeweilige Sperrglied auch als ein elektromagnetisch oder über ein Vorschaltventil pneumatisch betätigbares Sperrelement zur Absperrung des jeweils innerhalb des Mehrkreis-Schutzventils angeordneten Überströmventils ausgebildet sein. Zur Erfassung des Luftdruckes in den absperrbaren Verbraucherkreisen ist an die betreffenden Druckleitungen jeweils ein den Sperrgliedern in Strömungsrichtung nachgeordneter Drucksensor angeschlossen.

Ein zugeordnetes Verfahren zur Steuerung dieser bekannten Druckluftanlage sieht vor, dass das Befüllen der Verbraucherkreise durch das Einschalten bzw. Ankoppeln des Kompressors bevorzugt im Schubbetrieb des Kraftfahrzeugs erfolgt, und zwar derart, dass ein Verbraucherkreis, z.B. aufgrund eines abgesunkenen Druckniveaus, ausgewählt und aufgefüllt wird, während die übrigen Verbraucherkreise durch das Schließen der zugeordneten Sperrglieder von der Druckluft-Versorgungseinrichtung abgetrennt sind. Ebenso sieht das bekannte Verfahren vor, dass die Verbraucherkreise, insbesondere bei der Inbetriebnahme des Kraftfahrzeugs, in einer festgelegten Reihenfolge aufgefüllt werden, wobei die gerade nicht befüllten Verbraucherkreise durch das Schließen der zugeordneten Sperrglieder von der Druckluft-Versorgungseinrichtung abgetrennt sind. Auch sieht das bekannte Verfahren vor, dass ein ausgewählter Verbraucherkreis auf ein höheres Druckniveau als die anderen Verbraucherkreise aufgefüllt und danach durch das Schließen des zugeordneten Sperrgliedes von der Druckluft-Versorgungseinrichtung abgetrennt wird. Aus diesem Verbraucherkreis soll dann bedarfsweise mindestens einer der anderen Verbraucherkreise aufgefüllt werden, so dass der Kompressor dafür nicht eingeschaltet oder an den Antriebsmotor angekoppelt werden muss. Schließlich soll durch das Schließen des betreffenden Sperrgliedes ein Verbraucherkreis auch dann von der Druckluft-Versorgungseinrichtung abgetrennt werden, wenn dort beispielsweise aufgrund einer aufgetretenen Leckage ein vorgegebener Druckgrenzwert unterschritten oder beim Auffüllen nicht erreicht wird.

Der vorliegenden Erfindung liegt nun die Aufgabe zu Grunde, ein Verfahren und eine Vorrichtung zur Steuerung einer Druckluft-Bremsanlage eines Fahrzeuggespanns der eingangs genannten Art anzugeben, mit denen eine Verbesserung der Betriebseigenschaften der Druckluft-Bremsanlage sowie eine weitere Absenkung des Kraftstoffverbrauchs erzielbar ist.

Die das Verfahren zur Steuerung einer Druckluft-Bremsanlage betreffende Aufgabe ist in Verbindung mit den Merkmalen des Oberbegriffs des Anspruchs 1 dadurch gelöst, dass zumindest ein Abschnitt der Vorratsleitung des Anhänger-Bremskreises bis auf einen vorab festgelegten oberen Druckgrenzwert mit Druckluft aufgefüllt wird, sofern die dafür erforderliche Druckluft durch die Druckluft-Versorgungseinrichtung energetisch günstig erzeugbar ist.

Vorteilhafte Ausgestaltungen und Weiterbildungen des erfindungsgemäßen Verfahrens sind Gegenstand der diesem Anspruch 1 zugeordneten Unteransprüche.

Die Erfindung geht demnach aus von einem Verfahren zur Steuerung einer Druckluft-Bremsanlage eines Fahrzeuggespanns, das aus einem Motorwagen und wenigstens einem Anhänger besteht, mit einer in dem Motorwagen angeordneten Druckluft-Versorgungseinrichtung, an die über ein Mehrkreis-Schutzventil zumindest ein nicht druckbegrenzter Motorwagen-Bremskreis und ein druckbegrenzter Anhänger-Brems-Kreis angeschlossen sind, wobei der Anhänger-Bremskreis im Motorwagen eine zwischen dem betreffenden Anschluss des Mehrkreis-Schutzventils und einem motorwagenseitig ersten Kupplungskopf angeordnete Vorratsleitung mit oder ohne einem Vorratsbehälter sowie einen dieser Vorratsleitung oder diesem Vorratsbehälter nachgeschalteten Abzweig zu einem Handbremsventil aufweist, und im Anhänger eine zwischen einem anhängerseitig ersten Kupplungskopf sowie Betriebsbremszylindern der Radbremsen angeordnete Vorratsleitung mit einem Anhänger-Bremsventil und einem diesem nachgeordneten Vorratsbehälter aufweist.

Zur Verbesserung der Betriebseigenschaften der Druckluft-Bremsanlage und zur weiteren Absenkung des Kraftstoffverbrauchs des Antriebsmotors ist gemäß der Erfindung vorgesehen, dass zumindest ein Abschnitt der Vorratsleitung des Anhänger-Bremskreises bis auf einen vorab festgelegten oberen Druckgrenzwert mit Druckluft aufgefüllt wird, sofern die dafür erforderliche Druckluft durch die Druckluft-Versorgungseinrichtung energetisch günstig erzeugbar ist.

Durch dieses Verfahren wird der absperrbare Abschnitt der Versorgungsleitung des Anhänger-Bremskreises somit als ein zusätzlicher Druckspeicher bzw. Vorratsbehälter genutzt, der bei energetisch günstig verfügbarer Druckluft auf den oberen Druckgrenzwert aufgefüllt wird. Aufgrund des relativ großen Speichervolumens des absperrbaren Abschnitts der Versorgungsleitung wird ein häufiges Ein- und Abschalten des Kompressors vermieden und damit die Lebensdauer der Druckluft-Versorgungseinrichtung erhöht. Da das Auffüllen des absperrbaren Abschnitts der Vorratsleitung bevorzugt in Betriebsphasen des Fahrzeuggespanns stattfindet, in denen Druckluft durch die Druckluft-Versorgungseinrichtung energetisch günstig erzeugbar ist, wird damit auch der Kraftstoffverbrauch des Antriebsmotors reduziert.

Erfindungsgemäß ist vorgesehen, dass zumindest ein Abschnitt der Vorratsleitung des Anhänger-Bremskreises dann, wenn Druckluft durch die Druckluft-Versorgungseinrichtung energetisch günstig erzeugbar ist, bis auf den oberen Druckgrenzwert p_{Gr_o} aufgefüllt und nach Erreichen oder Überschreiten des oberen Druckgrenzwertes p_{Gr_o} durch das Schließen eines Sperrelementes gegenüber der Druckluft-Versorgungseinrichtung abgesperrt wird.

Erfindungsgemäß ist vorgesehen, dass spätestens dann, wenn der Luftdruck p_{Br_V} in dem abgesperrten Abschnitt der Vorratsleitung des Anhänger-Bremskreises auf den unteren Druckgrenzwert p_{Gr_u} gefallen ist oder diesen unterschritten hat, das Sperrelement wieder geöffnet und dieser Abschnitt der Vorratsleitung wieder mit Druckluft aufgefüllt wird. Hierzu kann der Kompressor der Druckluft-Versorgungseinrichtung aktiv eingeschaltet bzw. an den Antriebsmotor angekoppelt werden. Aufgrund des durch das Öffnen des Sperrelementes in der Druckleitung der Druckluft-Versorgungseinrichtung eintretenden Druckabfalls wird der Kompressor jedoch zumeist durch die Drucksteuerung der Druckluft-Versorgungseinrichtung automatisch eingeschaltet.

Wenn aber Druckluft durch die Druckluft-Versorgungseinrichtung zuvor schon energetisch günstig bzw. mit geringem Kraftstoffverbrauch erzeugbar ist, wird das Sperrelement auch geöffnet und der betreffende Abschnitt der Vorratsleitung des Anhänger-Bremskreises mit Druckluft aufgefüllt, bevor der Luftdruck p_{Br_V} in diesem Abschnitt der Vorratsleitung den unteren Druckgrenzwert p_{Gr_u} erreicht hat (p_{Gr_u} < p_{Br_V} < p_{Gr_o}).

Außerdem kann vorgesehen sein, dass das Sperrelement auch dann geöffnet und der betreffende Abschnitt der Vorratsleitung des Anhänger-Bremskreises mit Druckluft aufgefüllt wird, wenn die Luftdruck p_{Br_V} in diesem Abschnitt der Vorratsleitung unter den oberen Druckgrenzwert p_{Gr_o} gesunken ist, den unteren Druckgrenzwert p_{Gr_u} jedoch noch nicht erreicht hat (p_{Gr_u} < p_{Br_V} < p_{Gr_o}), aber Druckluft durch die Druckluft-Versorgungseinrichtung momentan energetisch günstig erzeugbar ist.

Um die Funktionssicherheit und die Zulassungsfähigkeit einer Druckluft-Bremsanlage mit der erfindungsgemäßen Steuerungsfunktion zu gewährleisten, kann vorgesehen sein, dass der obere Druckgrenzwert p_{Gr_o} dem für Druckluft-Bremsanlagen zulassungstechnisch vorgeschriebenen Maximaldruck von beispielsweise p_{Br_max} = 8,5 bar und der untere Druckgrenzwert p_{Gr_o} dem für Druckluft-Bremsanlagen zulassungstechnisch vorgeschriebenen Mindestdruck von beispielsweise p_{Br_min} = 7,5 bar entspricht (p_{Gr_o} = p_{Br_max} = 8,5 bar; p_{Gr_o} = p_{Br_min} = 7,5 bar). Die entsprechenden Druckgrenzwerte P_{Br_min}, p_{Br_max} sind durch die entsprechende EG-Richtlinie "Bremsanlagen" vorgegeben.

Durch das Schließen eines in dem zugeordneten Teil des Mehrkreis-Schutzventils angeordneten Sperrelementes kann die gesamte Vorratsleitung des Anhänger-Bremskreises bedarfsweise abgesperrt werden.

Durch das Schließen eines in der Vorratsleitung des Motorwagens zwischen dem Vorratsbehälter und dem Abzweig zu dem Handbremsventil angeordneten Sperrelementes kann ein sehr großer Abschnitt der Vorratsleitung des Anhänger-Bremskreises bedarfsweise abgesperrt werden.

Durch das Schließen eines in der Vorratsleitung des Motorwagens zwischen dem Vorratsbehälter und dem Abzweig zu dem Handbremsventil angeordneten Sperrelementes kann ein auch noch großer Abschnitt der Vorratsleitung des Anhänger-Brems-Kreises bedarfsweise abgesperrt werden. Der absperrbare Abschnitt der Vorratsleitung umfasst dann aber nicht den zwischen dem betreffenden Anschluss des Mehrkreis-Schutzventils und dem Sperrelement befindlichen Vorratsbehälter. Dieser Vorratsbehälter wird in diesem Fall auf dem durch das zugeordnete Druckbegrenzungsventil des Mehrkreis-Schutzventils vorgegeben Druck von üblicherweise 8,5 bar gehalten, was mit Funktionsvorteilen verbunden sein kann. So führt in diesem Fall das Öffnen des Sperrelementes nicht zwangsläufig zu einem sofortigen Einschalten des Kompressors, da der zuvor abgesperrte Abschnitt der Vorratsleitung zunächst aus diesem Vorratsbehälter aufgefüllt wird.

Ebenso kann durch das Schließen eines in der Vorratsleitung des Motorwagens zwischen dem Abzweig zu dem Handbremsventil und dem ersten motorwagenseitigen Kupplungskopf angeordneten Sperrelementes ein ähnlich großer Abschnitt der Vorratsleitung des Anhänger-Bremskreises bedarfsweise abgesperrt werden. Hierdurch bleibt dann neben dem in der Vorratsleitung des Motorfahrzeugs angeordneten Vorratsbehälter auch die zu dem Handbremsventil führende Vorratsleitung von dem erfindungsgemäßen Verfahren unbeeinflusst, was mit Funktionsvorteilen verbunden sein kann.

Die erfindungsgemäße Steuerungsfunktion kann aber auch auf die im Anhänger befindliche Vorratsleitung des Anhänger-Bremskreises beschränkt sein. Hierzu ist vorgesehen, dass ein Abschnitt der Vorratsleitung des Anhänger-Bremskreises durch das Schließen eines in der Vorratsleitung des Anhängers zwischen dem ersten anhängerseitigen Kupplungskopf und dem Anhänger-Bremsventil angeordneten Sperrelementes bedarfsweise abgesperrt wird.

Der in dem absperrbaren Abschnitt der Vorratsleitung des Anhänger-Bremskreises herrschende Luftdruck wird bevorzugt mittels eines dem Sperrelement in Strömungsrichtung nachgeordneten und an die Vorratsleitung angeschlossenen Drucksensors erfasst. Der Drucksensor kann aber auch an einem Vorratsbehälter für Druckluft angeordnet sein, welcher mit dem absperrbaren Abschnitt der Versorgungsleitung des Anhänger-Bremskreises verbunden ist. Es kann sich dabei um einen ohnehin vorhandenen Drucksensor oder um einen zur Durchführung des erfindungsgemäßen Verfahrens speziell eingebauten Drucksensor handeln.

Derjenige Betriebszustand des Fahrzeuggespanns, in dem Druckluft durch die Druckluft-Versorgungseinrichtung energetisch günstig erzeugbar ist, wird bevorzugt daran erkannt, dass sich der Antriebsmotor des Motorwagens im Schubbetrieb befindet, dass eine Motorbremse des Antriebsmotors aktiviert ist, dass eine Dauerbremse des Motorwagens eingeschaltet ist, und/oder dass die Betriebsbremse des Fahrzeuggespanns länger als über eine vorab festgelegte Zeitspanne betätigt wird.

Da für die gewünschte Wirkung der erfindungsgemäßen Steuerungsfunktion ein ausreichend großes Speichervolumen des absperrbaren Abschnitts der Versorgungsleitung erforderlich ist, wird die Steuerungsfunktion zum Auffüllen und Absperren zumindest eines Abschnittes der Vorratsleitung des Anhänger-Bremskreises bei abgekoppeltem Anhänger vorzugsweise deaktiviert.

Gemäß einer anderen Weiterbildung des Verfahrens gemäß der Erfindung kann vorgesehen sein, dass unabhängig davon, ob im absperrbaren Abschnitt der Vorratsleitung des Anhänger-Bremskreises der zulässige Maximaldruck vorliegt oder nicht, dieser Abschnitt der Vorratsleitung immer dann abgesperrt bleibt, wenn der Fahrzeugmotor nicht im Schubbetrieb sondern im Zugbetrieb betrieben wird. Dies wird nicht als Nachteil angesehen, denn im Zugbetrieb des Fahrzeugmotors kann Druckluft nur durch den zusätzlichen Einsatz von Kraftstoff erzeugt werden, was ja vermieden werden soll. Sollte der Druck in dem Anhänger-Bremskreis jedoch unter den vorbestimmten Minimaldruck fallen, so wird der absperrbare Abschnitt der Vorratsleitung des Anhänger-Bremskreises geöffnet und erneut mit Druckluft höheren Druckes aufgefüllt.

Weiter kann vorgesehen sein, dass der zumindest eine absperrbare Abschnitt der Vorratsleitung des Anhänger-Bremskreises dann geöffnet wird, wenn dort der zulässige Maximaldruck unterschritten ist und ein Schubbetrieb des Fahrzeugmotors festgestellt wurde.

Eine andere Weiterbildung sieht vor, dass der zumindest eine absperrbare Abschnitt der Vorratsleitung des Anhänger-Bremskreises dann geöffnet wird, wenn vergleichsweise kurzfristig der Eintritt eines Schubbetriebes des Fahrzeugmotors zu erwarten ist. Ob das Fahrzeug bzw. der Fahrzeugmotor in Kürze von einem Zugbetrieb in einen Schubbetrieb wechseln wird, wird vorzugsweise aus der aktuellen Position des Fahrzeugs, aus Streckendaten über den vor dem Fahrzeug liegenden Streckenabschnitt und/oder aus der aktuellen Fahrzeuggeschwindigkeit bestimmt.

Außerdem kann vorgesehen sein, dass das Sperrelement in dem zumindest einen absperrbaren Abschnitt der Vorratsleitung des Anhänger-Bremskreises solange in seiner Schließstellung gehalten und dadurch ein Druckaufbau im Anhänger-Bremskreis und/oder im Handbremskreis verhindert wird, bis in dem zumindest einen Motorwagen-Bremskreis ein für einen sicheren Bremsbetrieb ausreichend hoher Luftdruck aufgebaut wurde.

Weiter kann vorgesehen sein, dass das Sperrelement in dem zumindest einen absperrbaren Abschnitt der Vorratsleitung des Anhänger-Bremskreises dann geschlossen wird, wenn ein Druckaufbau im Anhänger-Bremskreis und/oder im Handbremskreis solange verhindert werden soll, bis die Anwesenheit eines Fahrers in dem Motorwagen festgestellt wurde.

Wie es schon aus der EP 0 827 470 B1 bekannt ist, kann das zur bedarfsweisen Absperrung eines Abschnittes der Vorratsleitung des Anhänger-Bremskreises vorgesehene Sperrelement innerhalb des Mehrkreis-Schutzventils an dem zugeordneten Überströmventil angeordnet oder als ein 2/2-Wege-Schaltventil ausgebildet und dem Mehrkreis-Schutzventil in Strömungsrichtung unmittelbar vor- oder nachgeordnet sein. In diesem Fall wird die Vorratsleitung des Anhänger-Bremskreises nach dem Auffüllen auf den oberen Druckgrenzwert p_{Gr_o} vollständig oder weitgehend vollständig gegenüber der Druckluft-Versorgungseinrichtung abgesperrt. Dies kann mittels eines schaltbaren Absperrventils oder aber auch mittels eines schaltbaren Drosselventils erfolgen.

So betrifft die Erfindung auch eine Vorrichtung zur Steuerung einer Druckluft-Bremsanlage eines Fahrzeuggespanns, das aus einem Motorwagen und mindestens einem Anhänger besteht, mit einer in dem Motorwagen angeordneten Druckluft-Versorgungseinrichtung, an die über ein Mehrkreis-Schutzventil zumindest ein nicht druckbegrenzter Motorwagen-Bremskreis und ein druckbegrenzter Anhänger-Brems-Kreis angeschlossen sind, wobei der Anhänger-Bremskreis im Motorwagen eine zwischen dem betreffenden Anschluss des Mehrkreis-Schutzventils und einem ersten motorwagenseitigen Kupplungskopf angeordnete Vorratsleitung mit oder ohne einem Vorratsbehälter sowie einen dieser Vorratsleitung oder diesem Vorratsbehälter nachgeordneten Abzweig zu einem Handbremsventil aufweist, und im Anhänger eine zwischen einem ersten anhängerseitigen Kupplungskopf sowie Betriebsbremszylindern der Radbremsen angeordnete Vorratsleitung mit einem Anhänger-Bremsventil und einem diesem nachgeordneten Vorratsbehälter aufweist.

Zur Lösung der vorrichtungsbezogenen Aufgabe ist vorgesehen, dass zum bedarfsweisen Absperren zumindest eines Abschnittes der Vorratsleitung des Anhänger-Bremskreises an einer geeigneten Stelle der Vorratsleitung ein ansteuerbares Sperrelement angeordnet ist, das als ein im unbetätigten Zustand geöffnetes, elektrisch ansteuerbares 2/2-Wege-Magnetschaltventil oder als ein im unbetätigten Zustand geöffnetes, über ein Vorschaltventil pneumatisch ansteuerbares 2/2-Wege-Druckschaltventil ausgebildet ist, und dass zur Erfassung des in dem absperrbaren Abschnitt der Vorratsleitung herrschenden Luftdruckes ein dem Sperrelement in Strömungsrichtung nachgeordneter Drucksensor an die Vorratsleitung oder an den mit dieser Vorratsleitung verbundenen Vorratsbehälter angeschlossen ist.

Vorteilhafte Ausgestaltungen und Weiterbildungen dieser Vorrichtung sind in den zugeordneten Unteransprüchen angegeben.

Das Sperrelement kann in der Vorratsleitung des Motorwagens zwischen dem Vorratsbehälter und dem Abzweig zu dem Handbremsventil angeordnet sein. Der absperrbare Abschnitt der Vorratsleitung umfasst dann nicht den zwischen dem betreffenden Anschluss des Mehrkreis-Schutzventils und dem Sperrelement befindlichen Vorratsbehälter, der dann permanent auf dem durch das zugeordnete Druckbegrenzungsventil des Mehrkreis-Schutzventils vorgegeben Druck von üblicherweise 8,5 bar gehalten wird.

Ebenso kann das Sperrelement in der Vorratsleitung des Motorwagens zwischen dem Abzweig zu dem Handbremsventil und dem ersten motorwagenseitigen Kupplungskopf angeordnet sein. In diesem Fall bleibt auch die zu dem Handbremsventil führende Vorratsleitung von der erfindungsgemäßen Steuerungsfunktion unbeeinflusst.

Um die erfindungsgemäße Steuerungsfunktion auch bei abgekoppeltem Anhänger zu ermöglichen, ist der Drucksensor bei den zwei vorgenannten Anordnungen des Sperrelementes an geeigneter Stelle zwischen dem Sperrelement und dem ersten motorwagenseitigen Kupplungskopf an die Vorratsleitung des Motorwagens angeschlossen.

Das Sperrelement kann jedoch auch in der Vorratsleitung des Anhängers zwischen dem ersten anhängerseitigen Kupplungskopf und dem Anhänger-Bremsventil angeordnet sein, wodurch auch noch ein relativ großes Speichervolumen des absperrbaren Abschnittes der Vorratsleitung des Anhänger-Bremskreises erzielt wird.

Bei dieser Anordnung des Sperrelementes kann der Drucksensor entweder zwischen dem Sperrelement und dem Anhänger-Bremsventil oder zwischen dem Anhänger-Bremsventil und dem Vorratsbehälter an die Vorratsleitung des Anhängers angeschlossen sein.

Schließlich sei darauf hingewiesen, dass die Erfindung auch ein Steuerungsgerät betrifft, welches zur Durchführung des Verfahrens bestimmt und ausgebildet ist.

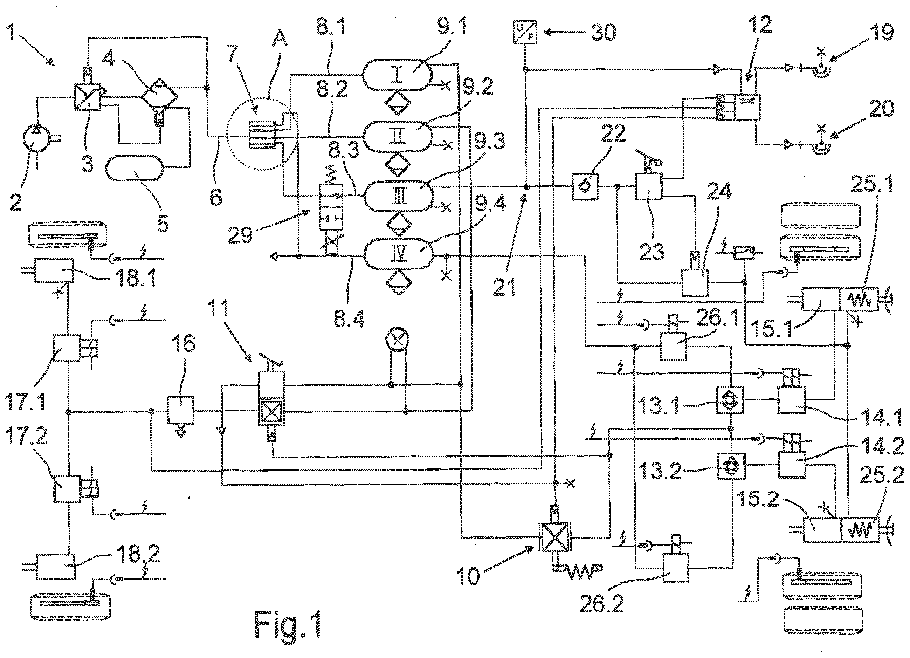

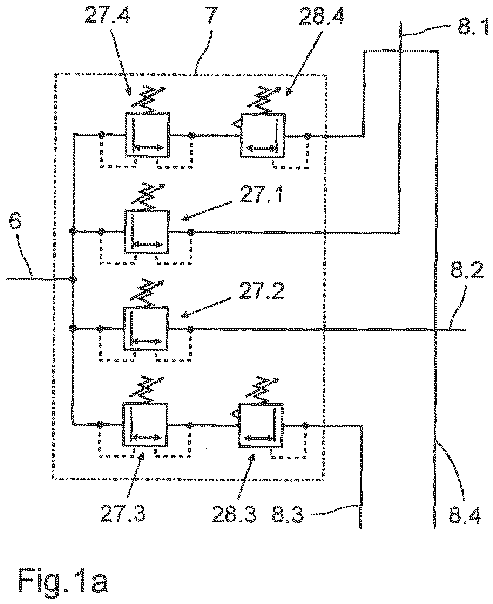

Zur weiteren Verdeutlichung der Erfindung ist der Beschreibung eine Zeichnung mit mehreren Ausführungsbeispielen beigefügt. In dieser zeigt
Fig. 1 eine schematische Ansicht einer Druckluft-Bremsanlage eines Motorfahrzeugs mit einer ersten Anordnung eines Sperrelementes und eines Drucksensors zur Anwendung des erfindungsgemäßen Verfahrens,
Fig. 1 a einen vergrößerten Ausschnitt der Druckluft-Bremsanlage gemäß Fig. 1 mit der ersten Anordnung des Sperrelementes und des Drucksensors,
Fig. 2 eine schematische Ansicht einer Druckluft-Bremsanlage eines Motorfahrzeugs mit einer zweiten Anordnung eines Sperrelementes und eines Drucksensors zur Anwendung des erfindungsgemäßen Verfahrens,
Fig. 2a einen vergrößerten Ausschnitt der Druckluft-Bremsanlage gemäß Fig. 2 mit der zweiten Anordnung des Sperrelementes und des Drucksensors,
Fig. 3 eine schematische Ansicht einer Druckluft-Bremsanlage eines Motorfahrzeugs mit einer dritten Anordnung eines Sperrelementes und eines Drucksensors zur Anwendung des erfindungsgemäßen Verfahrens,
Fig. 4 eine schematische Ansicht einer Druckluft-Bremsanlage eines Motorfahrzeugs mit einer vierten Anordnung eines Sperrelementes und eines Drucksensors zur Anwendung des erfindungsgemäßen Verfahrens,
Fig. 5 eine schematische Ansicht einer Druckluft-Bremsanlage eines Deichselanhängers mit einer fünften Anordnung eines Sperrelementes und eines Drucksensors zur Anwendung des erfindungsgemäßen Verfahrens, und
Fig. 6 eine schematische Ansicht einer Druckluft-Bremsanlage eines Sattelanhängers mit einer sechsten Anordnung eines Sperrelementes und eines Drucksensors zur Anwendung des erfindungsgemäßen Verfahrens.

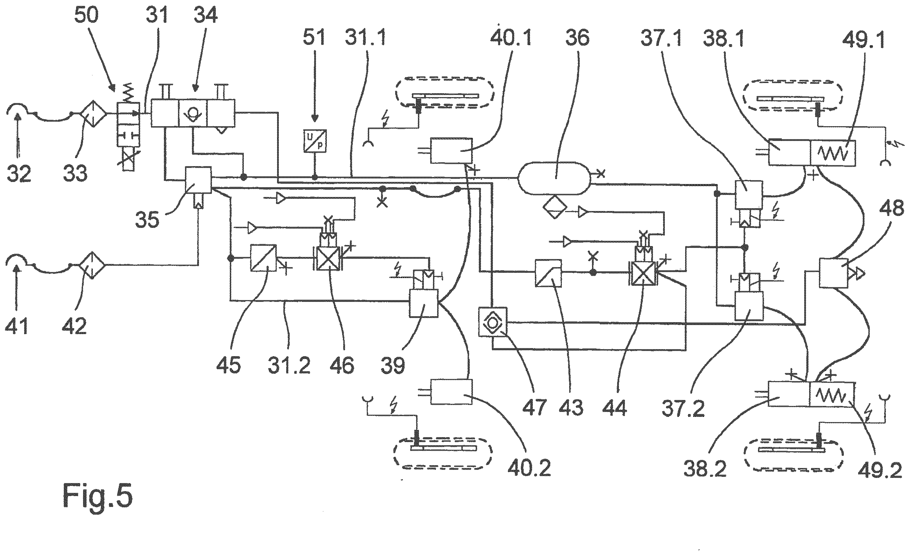

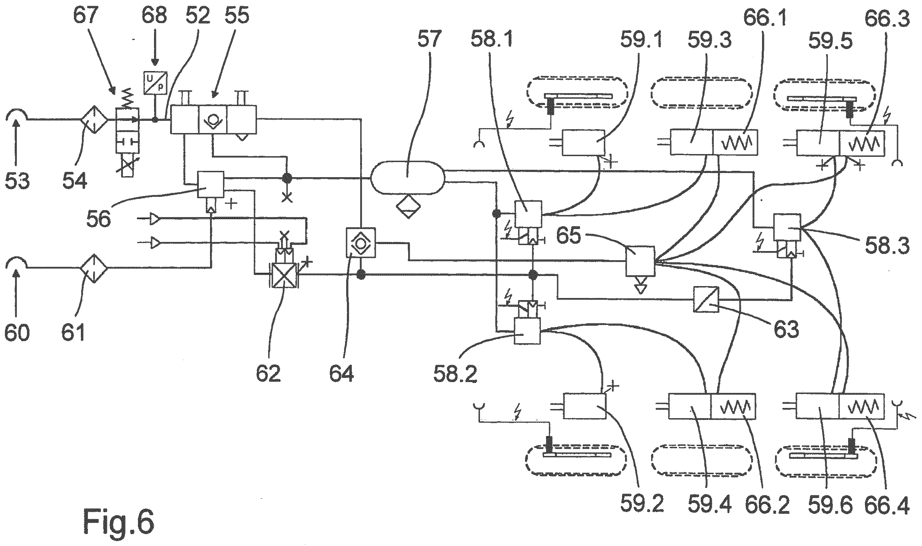

In den Figuren 1 bis 4 ist jeweils eine bekannte Druckluft-Bremsanlage eines Motorfahrzeugs in schematischer Form abgebildet, die zur Durchführung des erfindungsgemäßen Verfahrens jeweils in unterschiedlicher Weise modifiziert ist. In Fig. 5 ist eine bekannte Druckluft-Bremsanlage eines Deichselanhängers in schematischer Form abgebildet, die zur Durchführung des erfindungsgemäßen Verfahrens ergänzt ist. Ebenso ist in Fig. 6 eine bekannte Druckluft-Bremsanlage eines Sattelanhängers in schematischer Form abgebildet, die zur Durchführung des erfindungsgemäßen Verfahrens modifiziert ist. Die schematischen Abbildungen der betreffenden Druckluft-Bremsanlagen sind dem Grundlehrgang 4, Titel: "Wirkungsweise von Druckluft-Bremsanlagen", der WABCO Fahrzeugsysteme GmbH, Hannover entnommen, der als PDF-Datei unter www.wabco-auto.com/intl/pdf/815/00/57/8150200573-04.pdf aus dem Internet frei herunter ladbar ist. Da die betreffenden Druckluft-Bremsanlagen dort ausführlich beschrieben sind, ist die vorliegende Beschreibung auf den Umfang beschränkt, der zum Verständnis des erfindungsgemäßen Verfahrens erforderlich ist.

Das Verfahren gemäß der Erfindung sieht vor, dass zumindest ein Abschnitt der Vorratsleitung des Anhänger-Bremskreises bis auf einen vorab festgelegten oberen Druckgrenzwert mit Druckluft aufgefüllt wird, sofern die dafür erforderliche Druckluft durch die Druckluft-Versorgungseinrichtung energetisch günstig erzeugbar ist.

Das Auffüllen dieses Abschnittes der Vorratsleitung des Anhänger-Bremskreises mit Druckluft erfolgt bis zu einem zulässigen Maximaldruck p_{Br_max}, beispielsweise 8,5 bar. Nach Erreichen dieses zulässigen Maximaldruckes p_{Br_max} wird dieser Abschnitt der Vorratsleitung durch das Schließen eines Sperrelementes gegenüber der Druckluft-Versorgungseinrichtung abgesperrt. Spätestens dann, wenn der Luftdruck p_{Br_V} in dem abgesperrten Abschnitt der Vorratsleitung des Anhänger-Bremskreises auf einen zulässigen Mindestdruck p_{Br_min} von beispielsweise 7,5 bar gefallen ist, soll das Sperrelement wieder geöffnet und dieser Abschnitt der Vorratsleitung wieder aufgefüllt werden.

Hierzu kann der Kompressor der Druckluft-Versorgungseinrichtung aktiv elektronisch gesteuert und geregelt oder durch die Drucksteuerung der Druckluft-Versorgungseinrichtung automatisch eingeschaltet bzw. an den Antriebsmotor angekoppelt werden. Sofern aber Druckluft durch die Druckluft-Versorgungseinrichtung zuvor schon energetisch günstig erzeugbar ist, soll das Sperrelement auch geöffnet und der betreffende Abschnitt der Vorratsleitung des Anhänger-Bremskreises aufgefüllt werden, bevor der Luftdruck p_{Br_V} in diesem Abschnitt der Vorratsleitung den zulässigen Mindestdruck p_{Br_min} erreicht hat. Durch dieses Verfahren wird der Kompressor weniger häufig ein- und abgeschaltet sowie bevorzugt dann betrieben, wenn Druckluft durch die Druckluft-Versorgungseinrichtung energetisch günstig erzeugbar ist, was beispielsweise dann der Fall ist, wenn sich der Antriebsmotor des Motorwagens bei einer Bergabfahrt des Fahrzeuggespanns im Schubbetrieb befindet.

Es kann auch vorgesehen sein, dass der zumindest eine Abschnitt der Vorratsleitung des Anhänger-Bremskreises immer dann abgesperrt ist, wenn ein Nachfüllen derselben mit Druckluft gerade nicht erwünscht ist, und zwar unabhängig davon, ob der zulässige Maximaldruck in diesem Abschnitt der Vorratsleitung vorliegt oder nicht. Dies kann beispielsweise dann der Fall sein, wenn der Fahrzeugmotor gerade nicht im Schubbetrieb betrieben wird. Der zumindest eine absperrbare Abschnitt der Vorratsleitung des Anhänger-Bremskreises wird jedoch dann durch das Sperrelement geöffnet, wenn dort der zulässige Maximaldruck unterschritten ist und ein Schubbetrieb des Fahrzeugmotors festgestellt wurde, oder wenn in einem vergleichsweise kurzen Zeitraum der Eintritt eines solchen Schubbetriebes zu erwarten ist. Information darüber, ob das Fahrzeug in Kürze von einem Zugbetrieb in einen Schubbetrieb wechseln wird, können Streckendaten über den vor dem Fahrzeug liegenden Streckenabschnitt in Verbindung mit der aktuellen Fahrzeuggeschwindigkeit und der Position des Fahrzeugs geben. Die aktuellen Fahrzeugpositionsdaten lassen sich in bekannter Weise mit Hilfe eines Navigationssystems ermitteln.

Außerdem kann vorgesehen sein, dass das Sperrelement in dem zumindest einen absperrbaren Abschnitt der Vorratsleitung des Anhänger-Bremskreises dann geschlossen wird, wenn ein Auffüllen bzw. ein Druckaufbau im Anhänger-Bremskreis und/oder im Handbremskreis solange verhindert werden soll, bis in dem zumindest einen Motorwagen-Bremskreis ein für einen sicheren Bremsbetrieb ausreichend hoher Luftdruck aufgebaut wurde.

Weiter kann vorgesehen sein, dass das Sperrelement in dem zumindest einen Abschnitt der Vorratsleitung des Anhänger-Bremskreises dann geschlossen wird, wenn ein Auffüllen bzw. ein Druckaufbau im Anhänger-Bremskreis und/oder im Handbremskreis solange verhindert werden soll, bis die Anwesenheit eines Fahrers in dem Motorwagen festgestellt wurde. Dadurch wird verhindert, dass Handbremse über den Handbremskreis lösbar ist, bevor in dem zumindest einen Motorwagen-Bremskreis durch einen priorisiert zuerst erfolgenden Druckaufbau eine für den sicheren Betrieb des Motorwagens ausreichend hohe Betriebsbremskraft erzeugbar ist. Außerdem ist dadurch ein unbeabsichtigtes Wegrollen des Fahrzeuggespanns verhinderbar, welches stattfinden könnte, wenn bei der Inbetriebnahme des Fahrzeuggespanns und bereits gelöster Handbremse sich die Handbremsstellzylinder nur allmählich mit Druckluft ausreichenden Drucks auffüllen.

Die in Fig. 1 schematisch abgebildete Druckluft-Bremsanlage eines Motorwagens weist eine Druckluft-Versorgungseinrichtung 1 auf, die einen Kompressor 2, einen Druckregler 3, einen Trockner 4 und einen Vorratsbehälter 5 aufweist. Der Kompressor 2 ist von dem nicht abgebildeten Antriebsmotor des Motorwagens antreibbar und fördert in eingeschaltetem bzw. angekoppeltem Zustand Druckluft aus der Atmosphäre über den Druckregler 3 und den Trockner 4 in eine Druckleitung 6. An den Trockner 4 ist auch der Vorratsbehälter 5 angeschlossen, in dem Druckluft zur bedarfsweise durchführbaren Regeneration des Trockners 4 gespeichert werden kann. An die Druckleitung 6 der Druckluft-Versorgungseinrichtung 1 sind über ein Vierkreis-Schutzventil 7 vier Bremskreise mit jeweils einer Vorratsleitung 8.1, 8.2, 8.3, 8.4 angeschlossen, nämlich zwei nicht-druckbegrenzte Motorwagen-Bremskreise, ein druckbegrenzter Anhänger-Bremskreis, sowie ein druckbegrenzter Motorwagen-Bremskreis und Motorwagen-Nebenverbraucherkreis.

Die Vorratsleitung 8.1 des ersten Motorwagen-Bremskreises führt über einen Vorratsbehälter 9.1 zu einem ALB-Regler 10 und zu einem Motorwagen-Bremsventil 11, von dem aus ein Steuerdruck zu dem ALB-Regler 10 und zu einem Anhänger-Steuerventil 12 geführt wird (ALB = automatisch lastabhängige Bremse). Von dem ALB-Regler 10 wird die Druckluft über zwei Zweiwegeventile 13.1, 13.2 und zwei ABS-Magnet-Ventile 14.1, 14.2 zu den Betriebsbremszylindern 15.1, 15.2 der Radbremsen an der Hinterachse des Motorwagens geführt (ABS = Antiblockiersystem). Ein zwischen dem ALB-Regler 10 und den beiden Zweiwegeventilen 13.1, 13.2 abgegriffener Steuerdruck wird zu dem Motorwagen-Bremsventil 11 geführt.

Die Vorratsleitung 8.2 des zweiten Motorwagen-Bremskreises führt über einen Vorratsbehälter 9.2 zu dem Motorwagen-Bremsventil 11 und von dort über ein Schnelllöseventil 16 und zwei ABS-Magnetventile 17.1 sowie 17.2 zu den Betriebsbremszylindern 18.1, 18.2 der Radbremsen an der Vorderachse des Motorwagens. Ein zwischen dem Schnelllöseventil 16 und den beiden ABS-Magnetventilen 17.1, 17.2 abgegriffener Steuerdruck wird zu dem Anhänger-Steuerventil 12 geführt.

Die Vorratsleitung 8.3 des Anhänger-Bremskreises führt über einen Vorratsbehälter 9.3 und das Anhänger-Steuerventil 12 zu einem ersten motorwagenseitigen Kupplungskopf 19, der zum Anschluss der Vorratsleitung der Druckluft-Bremsanlage eines Anhängers dient. Von dem Anhänger-Steuerventil 12 führt zudem eine Steuerleitung zu einem zweiten motorwagenseitigen Kupplungskopf 20, der zum Anschluss der Steuerleitung der Druckluft-Bremsanlage des Anhängers dient. Zwischen dem Vorratsbehälter 9.3 und dem Anhänger-Steuerventil 12 weist die Vorratsleitung 8.3 einen Abzweig 21 auf, der über ein Rückschlagventil 22 zu einem Handbremsventil 23 und einem Relaisventil 24 führt. Von dem Handbremsventil 23, das zur manuellen Betätigung der Feststellbremse dient, sind eine Steuerleitung zu dem Anhänger-Steuerventil 12 und eine Steuerleitung zu dem Relaisventil 24 geführt. Bei betätigtem Handbremsventil 23 wird Druckluft der Vorratsleitung 8.3 durch das Relaisventil 24 zu den Feststellbremszylindern 25.1, 25.2 der Radbremsen an der Hinterachse des Motorwagens geführt, wodurch die durch Federn geschlossene Feststellbremse gelöst wird.

Die Vorratsleitung 8.4 des Motorwagen-Bremskreis und Motorwagen-Nebenverbraucherkreises führt einerseits über einen Vorratsbehälter 9.4 und zwei Ast-Brems-Ventile 26.1, 26.2, die beiden Zweiwegeventile 13.1, 13.2, und die beiden ABS-Magnet-Ventile 14.1, 14.2 zu den Betriebsbremszylindern 15.1, 15.2 der Radbremsen an der Hinterachse des Motorwagens (ASR = Antischlupfregelung). Andererseits führt die Vorratsleitung 8.4 des Motorwagen-Bremskreis und Motorwagen-Nebenverbraucherkreises zu nicht näher dargestellten Nebenverbrauchern.

Zur Veranschaulichung des Vierkreis-Schutzventils 7 ist der Ausschnitt A von Fig. 1 in Fig. 1 a vergrößert dargestellt. Hieraus ist ersichtlich, dass die mittleren Abschnitte des Vierkreis-Schutzventils 7, die den nicht-druckbegrenzten Motorwagen-Bremskreisen zugeordnet sind, jeweils ein zwischen der Druckleitung 6 der Druckluft-Versorgungseinrichtung 1 und der betreffenden Vorratsleitung 8.1, 8.2 angeordnetes Überströmventil 27.1, 27.2 aufweisen. Im Unterschied dazu weisen die äußeren Abschnitte des Vierkreis-Schutzventils 7, die dem druckbegrenzten Anhänger-Bremskreis und dem druckbegrenzten Motorwagen-Bremskreis und Motorwagen-Nebenverbraucherkreis zugeordnet sind, zwischen der Druckleitung 6 der Druckluft-Versorgungseinrichtung 1 und der betreffenden Vorratsleitung 8.3, 8.4 jeweils ein serielle Anordnung eines Überströmventils 27.3, 27.4 und eines Druckbegrenzungsventils 28.3, 28.4 auf.

Um nun die erfindungsgemäße Steuerungsfunktion anwenden zu können, ist in einer in Fig. 1 abgebildeten ersten Modifikation der Druckluft-Bremsanlage des Motorwagens ein im unbetätigten Zustand geöffnetes, als ein 2/2-Wege-Magnetschaltventil ausgebildetes Sperrelement 29 zwischen dem Vierkreis-Schutzventil 7 und dem Vorratsbehälter 9.3 in der Vorratsleitung 8.3 angeordnet. Alternativ dazu könnte das Sperrelement 29 auch als ein über ein zugeordnetes Vorsteuerventil pneumatisch ansteuerbares 2/2-Wege-Druckschaltventil ausgebildet sein. Der entsprechend dem erfindungsgemäßen Verfahren absperrbare Abschnitt der Vorratsleitung 8.3 des Anhänger-Bremskreises umfasst somit fast die gesamte Vorratsleitung 8.3 des Motorwagens einschließlich des Vorratsbehälters 9.3 sowie die Vorratsleitung eines angekoppelten Anhängers. Zur Erfassung des in dem absperrbaren Abschnitt der Vorratsleitung 8.3 herrschenden Luftdruckes ist ein Drucksensor 30 vorgesehen, der vorliegend beispielhaft zwischen dem Abzweig 21 zu dem Handbremsventil 23 und dem Anhänger-Steuerventil 12 an die Vorratsleitung 8.3 angeschlossen ist.

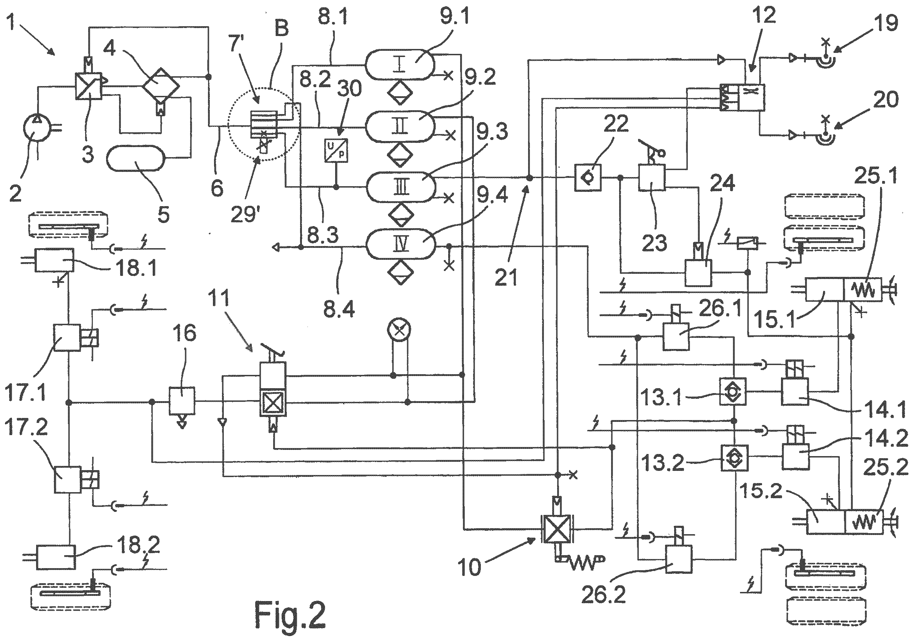

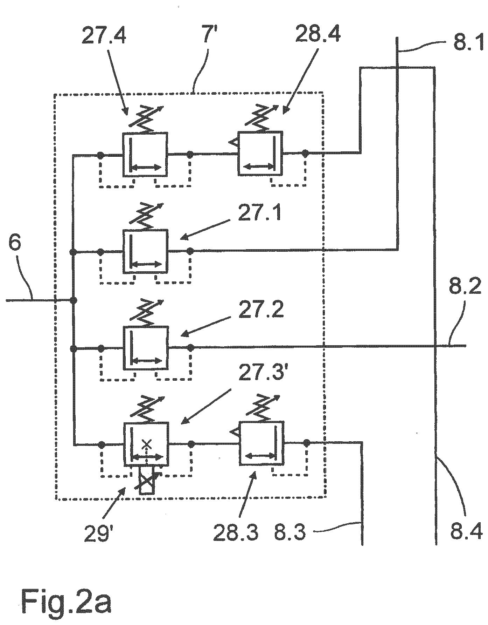

In einer in Fig. 2 abgebildeten zweiten Modifikation der Druckluft-Bremsanlage des Motorwagens ist das Vierkreis-Schutzventil 7' gegenüber der Ausführung gemäß Fig. 1 derart geändert, dass die Vorratsleitung 8.3 des Anhänger-Bremskreises innerhalb des Vierkreis-Schutzventils 7' absperrbar ist. Wie dem in Fig. 2a vergrößert dargestellten Ausschnitt B von Fig. 2 entnommen werden kann, ist dies vorliegend dadurch realisiert, dass das zugeordnete Überströmventil 27.3' nun absperrbar ausgebildet ist. Hierzu ist das Überströmventil 27.3' mit einem als ein elektromagnetisch betätigbares Sperrventil ausgebildeten Sperrelement 29' versehen. Alternativ dazu könnte das Sperrelement 29' auch als ein über ein zugeordnetes Vorsteuerventil pneumatisch ansteuerbares Sperrventil ausgebildet sein. Der entsprechend dem erfindungsgemäßen Verfahren absperrbare Abschnitt der Vorratsleitung 8.3 des Anhänger-Bremskreises umfasst in diesem Fall somit die gesamte Vorratsleitung 8.3 des Motorwagens einschließlich des Vorratsbehälters 9.3 sowie die Vorratsleitung eines angekoppelten Anhängers. Zur Erfassung des in der Vorratsleitung 8.3 herrschenden Luftdruckes ist der Drucksensor 30 vorliegend beispielhaft zwischen dem Vierkreis-Schutzventil 7' und dem Vorratsbehälter 9.3 an die Vorratsleitung 8.3 angeschlossen.

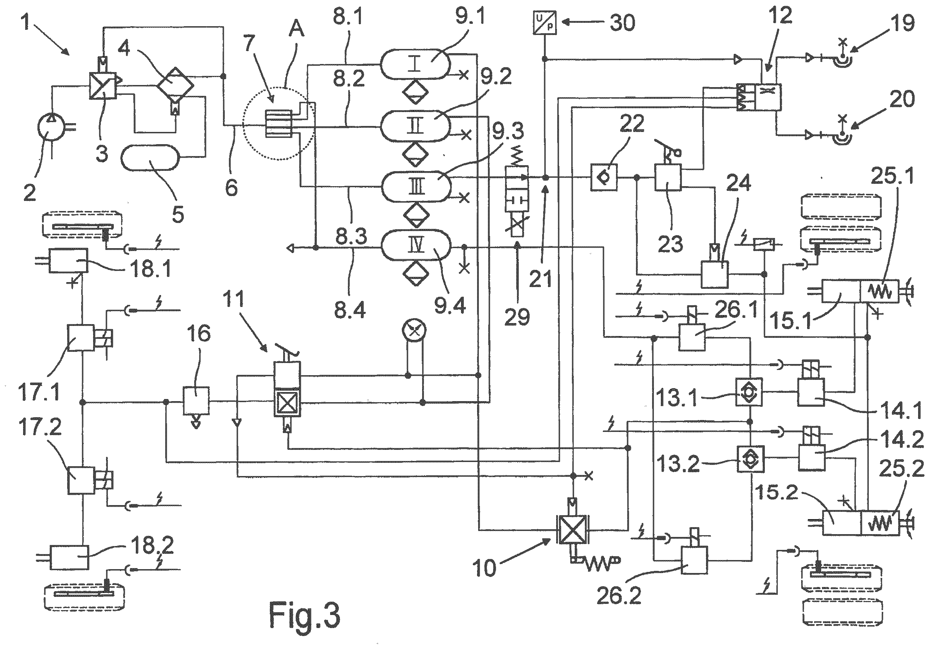

In einer in Fig. 3 abgebildeten dritten Modifikation der Druckluft-Bremsanlage des Motorwagens ist das im unbetätigten Zustand geöffnete, als ein 2/2-Wege-Magnetschaltventil ausgebildete Sperrelement 29 zwischen dem Vorratsbehälter 9.3 und dem Abzweig 21 zu dem Handbremsventil 23 in der Vorratsleitung 8.3 angeordnet. Der entsprechend dem erfindungsgemäßen Verfahren absperrbare Abschnitt der Vorratsleitung 8.3 des Anhänger-Bremskreises umfasst in diesem Fall nicht den Vorratsbehälter 9.3, dessen Luftvolumen somit auf dem durch das Druckbegrenzungsventil 28.3 vorgegebenen Maximaldruck von beispielsweise 8,5 bar gehalten wird. Hierdurch führt das Öffnen des Sperrelementes 29 nicht zwangsläufig zu einem sofortigen Einschalten des Kompressors, da der zuvor abgesperrte Abschnitt der Vorratsleitung 8.3 zunächst aus dem Vorratsbehälter 9.3 aufgefüllt wird. Zur Erfassung des in dem absperrbaren Abschnitt der Vorratsleitung 8.3 herrschenden Luftdruckes ist der Drucksensor 30 wie zuvor zwischen dem Abzweig 21 zu dem Handbremsventil 23 und dem Anhänger-Steuerventil 12 an die Vorratsleitung 8.3 angeschlossen.

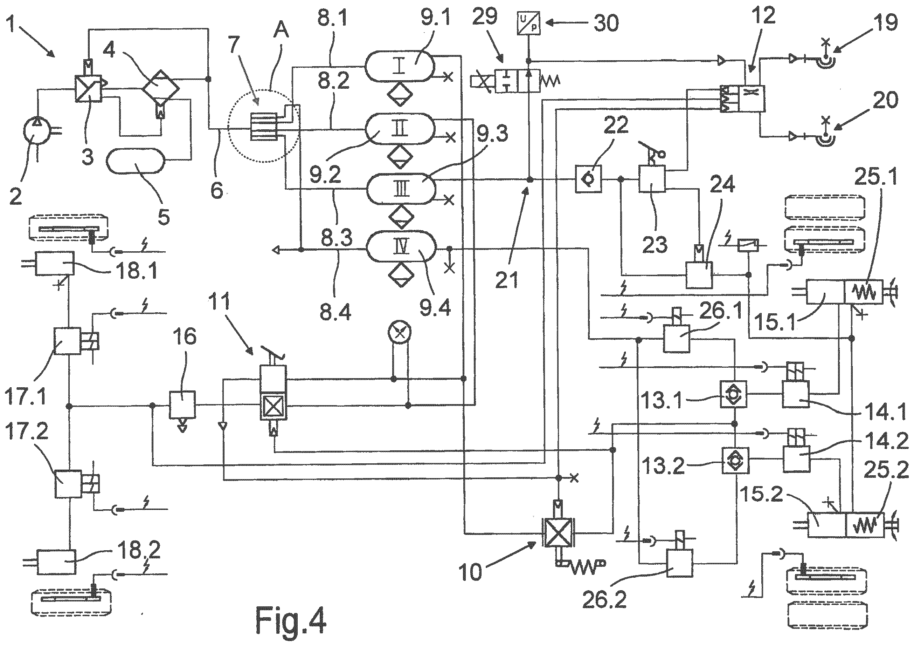

In einer in Fig. 4 abgebildeten vierten Modifikation der Druckluft-Bremsanlage des Motorwagens ist das im unbetätigten Zustand geöffnete, als ein 2/2-Wege-Magnetschaltventil ausgebildete Sperrelement 29 nun zwischen dem Abzweig 21 zu dem Handbremsventil 23 und dem Anhänger-Steuerventil 12 in der Vorratsleitung 8.3 angeordnet. Der entsprechend dem erfindungsgemäßen Verfahren absperrbare Abschnitt der Vorratsleitung 8.3 des Anhänger-Bremskreises umfasst in diesem Fall nun neben dem Vorratsbehälter 9.3 auch den zu dem Handbremsventil 23 führenden Abschnitt der Vorratsleitung 8.3 nicht mehr, was mit Funktionsvorteilen verbunden sein kann. Der zur Erfassung des in dem absperrbaren Abschnitt der Vorratsleitung 8.3 herrschenden Luftdruckes vorgesehene Drucksensor 30 ist ebenfalls zwischen dem Abzweig 21 zu dem Handbremsventil 23 und dem Anhänger-Steuerventil 12 an die Vorratsleitung 8.3 angeschlossen.

Die in Fig. 5 schematisch abgebildete Druckluft-Bremsanlage eines Deichselanhängers weist eine Vorratsleitung 31 auf, die von einem mit dem ersten Kupplungskopf 19 des Motorwagens verbindbaren ersten Kupplungskopf 32 des Anhängers über einen Filter 33 und ein Doppellöseventil 34 zu einem Anhänger-Bremsventil 35 geführt ist. Von dem Anhänger-Bremsventil 35 führt ein erster Zweig der Vorratsleitung 31.1 über einen Vorratsbehälter 36 und zwei ABS-Relaisventile 37.1, 37.2 zu den Betriebsbremszylindern 38.1, 38.2 der Radbremsen an der Hinterachse des Deichselanhängers. Ein zweiter Zweig der Vorratsleitung 31.2 führt von dem Anhänger-Bremsventil 35 über ein ABS-Relaisventil 39 zu den zwei Betriebsbremszylindern 40.1, 40.2 der Radbremsen an der Vorderachse des Deichselanhängers.

Zur Steuerung des Anhänger-Bremsventils 35 ist eine Steuerleitung von einem mit dem zweiten Kupplungskopf 20 des Motorwagens verbindbaren zweiten Kupplungskopf 41 des Anhängers über einen Filter 42 zu dem Anhänger-Bremsventil 35 geführt. Die Steuerung der beiden ABS-Relaisventile 37.1, 37.2 der Hinterachse erfolgt über eine Steuerleitung, die von dem Anhänger-Bremsventil 35 über ein Druckbegrenzungsventil 43 und einen ALB-Regler 44 zu den ABS-Relaisventilen 37.1, 37.2 geführt ist. Die Steuerung des ABS-Relaisventils 39 der Vorderachse erfolgt über eine nicht gesondert bezeichnete Steuerleitung, die von dem zweiten Zweig der Vorratsleitung 31.2 über ein Druckverhältnisventil 45 und einen ALB-Regler 46 zu dem ABS-Relaisventil 39 geführt ist.

Zum Lösen der Feststellbremse des Deichselanhängers ist der erste Zweig der Vorratsleitung 31.1 über das Doppellöseventil 34 sowie der Ausgang des ALB-Reglers 44 über ein Zweiwegeventil 47 und ein Schnellentlüftungsventil 48 mit den Feststellbremszylindern 49.1, 49.2 der Radbremsen an der Hinterachse des Deichselanhängers verbindbar.

Zur Anwendung der erfindungsgemäßen Steuerungsfunktion ist die in Fig. 5 abgebildete und an sich bekannte Druckluft-Bremsanlage eines Deichselanhängers derart modifiziert, dass ein im unbetätigten Zustand geöffnetes, als ein 2/2-Wege-Magnetschaltventil ausgebildetes Sperrelement 50 zwischen dem Filter 33 und dem Doppellöseventil 34 in der Vorratsleitung 31 angeordnet ist. Alternativ dazu könnte das Sperrelement 50 auch als ein über ein zugeordnetes Vorsteuerventil pneumatisch ansteuerbares 2/2-Wege-Druckschaltventil ausgebildet sein. Der entsprechend dem erfindungsgemäßen Verfahren absperrbare Abschnitt der Vorratsleitung 31 des Anhänger-Brems-Kreises umfasst somit fast die gesamte Vorratsleitung 31, 31.1, 31.2 des Anhängers einschließlich des Vorratsbehälters 36. Zur Erfassung des in dem absperrbaren Abschnitt der Vorratsleitung 31 herrschenden Luftdruckes ist ein Drucksensor 51 vorgesehen, der vorliegend beispielhaft zwischen dem Anhänger-Bremsventil 35 und dem Vorratsbehälter 36 an den ersten Zweig der Vorratsleitung 31.1 angeschlossen ist.

Die in Fig. 6 schematisch abgebildete Ausführungsform einer Druckluft-Bremsanlage eines Sattelanhängers weist eine Vorratsleitung 52 auf, die von einem mit dem ersten Kupplungskopf 19 des Motorwagens verbindbaren ersten Kupplungskopf 53 des Anhängers über einen Filter 54 und ein Doppellöseventil 55 zu einem Anhänger-Bremsventil 56 geführt ist. Von dem Anhänger-Bremsventil 56 ist die Vorratsleitung 52 weiter über einen Vorratsbehälter 57 und zwei ABS-Relaisventile 58.1, 58.2 zu den Betriebsbremszylindern 59.1, 59.2, 59.3, 59.4 der Radbremsen an den beiden vorderen Achsen des Sattelanhängers sowie über ein weiteres ABS-Relaisventil 58.3 zu den Betriebsbremszylindern 59.5, 59.6 an der hinteren Achse des Sattelanhängers geführt. Zur Steuerung des Anhänger-Bremsventils 56 ist eine Steuerleitung von einem mit dem zweiten Kupplungskopf 20 des Motorwagens verbindbaren zweiten Kupplungskopf 60 des Anhängers über einen Filter 61 zu dem Anhänger-Bremsventil 56 geführt. Die Steuerung der ABS-Relaisventile 58.1, 58.2, 58.3 erfolgt über eine Steuerleitung, die von dem Anhänger-Bremsventil 56 über einen ALB-Regler 62 zu den ABS-Relaisventilen 58.1, 58.2, 58.3 geführt ist, wobei dem ABS-Relaisventil 58.3 der hinteren Achse ein Druckverhältnisventil 63 vorgeschaltet ist. Zum Lösen der Feststellbremse des Sattelanhängers ist die Vorratsleitung 52 über das Doppellöseventil 55 sowie der Ausgang des ALB-Reglers 62 über ein Zweiwegeventil 64 und ein Schnellentlüftungsventil 65 mit den Feststellbremszylindern 66.1, 66.2, 66.3, 66.4 der Radbremsen an den beiden hinteren Achsen des Sattelanhängers verbindbar.

Zur Anwendung der erfindungsgemäßen Steuerungsfunktion ist die in Fig. 6 abgebildete und an sich bekannte Druckluft-Bremsanlage eines Sattelanhängers derart modifiziert, dass ein im unbetätigten Zustand geöffnetes, als ein 2/2-Wege-Magnetschaltventil ausgebildetes Sperrelement 67 zwischen dem Filter 54 und dem Doppellöseventil 55 in der Vorratsleitung 52 angeordnet ist. Alternativ dazu könnte das Sperrelement 67 auch als ein über ein zugeordnetes Vorsteuerventil pneumatisch ansteuerbares 2/2-Wege-Druckschaltventil ausgebildet sein. Der entsprechend dem erfindungsgemäßen Verfahren absperrbare Abschnitt der Vorratsleitung 52 des Anhänger-Bremskreises umfasst somit fast die gesamte Vorratsleitung 52 des Anhängers einschließlich des Vorratsbehälters 57. Zur Erfassung des in dem absperrbaren Abschnitt der Vorratsleitung 52 herrschenden Luftdruckes ist ein Drucksensor 68 vorgesehen, der vorliegend beispielhaft zwischen dem Sperrelement 67 und dem Doppellöseventil 55 an die Vorratsleitung 52 angeschlossen ist.

### Bezugszeichen

1 Druckluft-Versorgungseinrichtung
2 Kompressor
3 Druckregler
4 Trockner
5 Vorratsbehälter
6 Druckleitung
7, 7' Mehrkreis-Schutzventil, Vierkreis-Schutzventil
8.1,8.2 Vorratsleitung
8.3,8.4 Vorratsleitung
9.1, 9.2 Vorratsbehälter
9.3, 9.4 Vorratsbehälter
10 ALB-Regler
11 Motorwagen-Bremsventil
12 Anhänger-Steuerventil
13.1, 13.2 Zweiwegeventil
14.1,14.2 ABS-Magnetventil
15.1,15.2 Betriebsbremszylinder
16 Schnelllöseventil
17.1,17.2 ABS-Magnetventil
18.1,18.2 Betriebsbremszylinder
19 Erster Kupplungskopf am Motorwagen zum Anschluss der Vorratsleitung der Druckluft-Bremsanlage eines Anhängers
20 Zweiter Kupplungskopf am Motorwagen zum Anschluss der Steuerleitung der Druckluft-Bremsanlage eines Anhängers
21 Abzweig
22 Rückschlagventil
23 Handbremsventil
24 Relaisventil
25.1,25.2 Feststellbremszylinder
26.1,26.2 ASR-Bremsventil
27.1,27.2 Überströmventil
27.3,27.3' Überströmventil
27.4 Überströmventil
28.3,28.4 Druckbegrenzungsventil
29, 29' Sperrelement
30 Drucksensor
31 Vorratsleitung
31.1 Erster Zweig der Vorratsleitung
31.2 Zweiter Zweig der Vorratsleitung
32 Erster Kupplungskopf am Anhänger zum Anschluss der Vorratsleitung der Druckluft-Bremsanlage des Anhängers
33 Filter
34 Doppellöseventil
35 Anhänger-Bremsventil
36 Vorratsbehälter
37.1,37.2 ABS-Relaisventil
38.1,38.2 Betriebsbremszylinder
39 ABS-Relaisventil
40.1 Erster Betriebsbremszylinder
40.2 Zweiter Betriebsbremszylinder
41 Zweiter Kupplungskopf am Anhänger zum Anschluss der Steuerleitung der Druckluft-Bremsanlage des Anhängers
42 Filter
43 Druckbegrenzungsventil
44 ALB-Regler
45 Druckverhältnisventil
46 ALB-Regler
47 Zweiwegeventil
48 Schnellentlüftungsventil
49.1,49.2 Festellbremszylinder
50 Sperrelement
51 Drucksensor
52 Vorratsleitung
53 Erster Kupplungskopf am Anhänger zum Anschluss der Vorratsleitung der Druckluft-Bremsanlage des Anhängers
54 Filter
55 Doppellöseventil
56 Anhänger-Bremsventil
57 Vorratsbehälter
58.1, 58.2 ABS-Relaisventil
58.3 ABS-Relaisventil
59.1, 59.2 Betriebsbremszylinder
59.3, 59.4 Betriebsbremszylinder
59.5,59.6 Betriebsbremszylinder
60 Zweiter Kupplungskopf am Anhänger zum Anschluss der Steuerleitung der Druckluft-Bremsanlage des Anhängers
61 Filter
62 ALB-Regler
63 Druckverhältnisventil
64 Zweiwegeventil
65 Schnellentlüftungsventil
66.1,66.2 Feststellbremszylinder
66.3,66.4 Feststellbremszylinder
67 Sperrelement
68 Drucksensor
A Ausschnitt
B Ausschnitt
p_{Br_max} Vorgeschriebener Maximaldruck
p_{Br_min} Vorgeschriebener Mindestdruck
p_{Br_V} Luftdruck in Vorratsleitung
p_{Gr_o} Oberer Druckgrenzwert
p_{Gr_u} Unterer Druckgrenzwert

## Patentansprüche

1. Verfahren zur Steuerung einer Druckluft-Bremsanlage eines Fahrzeuggespanns, das aus einem Motorwagen und wenigstens einem Anhänger besteht, mit einer in dem Motorwagen angeordneten Druckluft-Versorgungseinrichtung (1), an die über ein Mehrkreis-Schutzventil (7, 7') zumindest ein nicht druckbegrenzter Motorwagen-Bremskreis und ein druckbegrenzter Anhänger-Bremskreis angeschlossen sind, wobei der Anhänger-Bremskreis im Motorwagen eine zwischen dem betreffenden Anschluss des Mehrkreis-Schutzventils (7, 7') und einem motorwagenseitig ersten Kupplungskopf (19) angeordnete Vorratsleitung (8.3) mit oder ohne einem Vorratsbehälter (9.3) sowie einen dieser Vorratsleitung (8.3) oder diesem Vorratsbehälter (9.3) nachgeschalteten Abzweig (21) zu einem Handbremsventil (23) aufweist, und im Anhänger eine zwischen einem anhängerseitig ersten Kupplungskopf (32, 53) sowie Betriebsbremszylindern (38.1, 38.2; 59.1 - 59.6) der Radbremsen angeordnete Vorratsleitung (31, 52) mit einem Anhänger-Bremsventil (35, 56) und einem diesem nachgeordneten Vorratsbehälter (36, 57) aufweist, **dadurch gekennzeichnet, dass** zumindest ein Abschnitt der Vorratsleitung (8.3, 31, 52) des Anhänger-Bremskreises bis auf einen vorab festgelegten oberen Druckgrenzwert (p_{Gr_o}) mit Druckluft aufgefüllt wird, sofern die dafür erforderliche Druckluft durch die Druckluft-Versorgungseinrichtung (1) energetisch günstig erzeugbar ist, wobei derjenige Betriebszustand des Fahrzeuggespanns, in dem Druckluft durch die Druckluft-Versorgungseinrichtung (1) energetisch günstig erzeugbar ist, daran erkannt wird, dass sich der Antriebsmotor des Motorwagens im Schubbetrieb befindet, dass eine Motorbremse des Antriebsmotors aktiviert ist, dass eine Dauerbremse des Motorwagens eingeschaltet ist, und/oder dass die Betriebsbremse des Fahrzeuggespanns länger als über eine vorab festgelegte Zeitspanne betätigt wird, wobei der betreffende Abschnitt der Vorratsleitung (8.3, 31, 52) durch das Schließen eines Sperrelementes (29, 29', 50, 67) abgesperrt wird, wenn der Luftdruck (p_{Br_V}) in diesem Abschnitt den oberen Druckgrenzwert (p_{Gr_o}) erreicht oder überschritten hat (p_{Br_V} ≥ p_{Gr_o}), wobei das Sperrelement (29, 29', 50, 67) spätestens dann geöffnet und der betreffende Abschnitt der Vorratsleitung (8.3, 31, 52) des Anhänger-Bremskreises wieder mit Druckluft aufgefüllt wird, wenn der Luftdruck (p_{Br_V}) in diesem Abschnitt der Vorratsleitung einen vorab festgelegten unteren Druckgrenzwert (p_{Gr_u}) erreicht oder unterschritten hat (p_{Br_V} ≤ p_{Gr_u}).

2. Verfahren nach Anspruch 1, **dadurch gekennzeichnet, dass** das Sperrelement (29, 29', 50, 67) auch dann geöffnet und der betreffende Abschnitt der Vorratsleitung (8.3, 31, 52) des Anhänger-Bremskreises mit Druckluft aufgefüllt wird, wenn der Luftdruck (p_{Br_V}) in diesem Abschnitt der Vorratsleitung (8.3, 31, 52) unter den oberen Druckgrenzwert (p_{Gr_o}) gesunken, den unteren Druckgrenzwert (p_{Gr_u}) jedoch noch nicht erreicht hat (p_{Gr_u} < p_{Br_V} < p_{Gr_o}), aber Druckluft durch die Druckluft-Versorgungseinrichtung (1) momentan energetisch günstig erzeugbar ist.

3. Verfahren nach einem der vorherigen Ansprüche, **dadurch gekennzeichnet, dass** der obere Druckgrenzwert (p_{Gr_o}) dem für Druckluft-Bremsanlagen zulassungstechnisch vorgeschriebenen Maximaldruck und der untere Druckgrenzwert (p_{Gr_u}) dem für Druckluft-Bremsanlagen zulassungstechnisch vorgeschriebenen Mindestdruck entspricht.

4. Verfahren nach einem der vorherigen Ansprüche, **dadurch gekennzeichnet, dass** die gesamte Vorratsleitung (8.3, 31, 52) des Anhänger-Bremskreises durch das Schließen eines in dem zugeordneten Teil des Mehrkreis-Schutzventils (7') angeordneten Sperrelementes (29') bedarfsweise abgesperrt wird.

5. Verfahren nach einem der vorherigen Ansprüche, **dadurch gekennzeichnet, dass** ein Abschnitt der Vorratsleitung (8.3, 31, 52) des Anhänger-Bremskreises durch das Schließen eines in der Vorratsleitung (8.3) des Motorwagens zwischen dem zugeordneten Anschluss des Mehrkreis-Schutzventils (7) und des Vorratsbehälters (9.3) angeordneten Sperrelementes (29) bedarfsweise abgesperrt wird.

6. Verfahren nach einem der vorherigen Ansprüche, **dadurch gekennzeichnet, dass** ein Abschnitt der Vorratsleitung (8.3, 31, 52) des Anhänger-Bremskreises durch das Schließen eines in der Vorratsleitung (8.3) des Motorwagens zwischen dem Vorratsbehälter (9.3) und dem Abzweig (21) zu dem Handbremsventil (23) angeordneten Sperrelementes (29) bedarfsweise abgesperrt wird.

7. Verfahren nach einem der vorherigen Ansprüche, **dadurch gekennzeichnet, dass** ein Abschnitt der Vorratsleitung (8.3, 31, 52) des Anhänger-Bremskreises durch das Schließen eines in der Vorratsleitung (8.3) des Motorwagens zwischen dem Abzweig (21) zu dem Handbremsventil (23) und dem ersten motorwagenseitigen Kupplungskopf (19) angeordneten Sperrelementes (29) bedarfsweise abgesperrt wird.

8. Verfahren nach einem der vorherigen Ansprüche, **dadurch gekennzeichnet, dass** ein Abschnitt der Vorratsleitung (8.3, 31, 52) des Anhänger-Bremskreises durch das Schließen eines in der Vorratsleitung (31, 52) des Anhängers zwischen dem ersten motorwagenseitigen Kupplungskopf (32, 53) und dem Anhänger-Bremsventil (35, 56) angeordneten Sperrelementes (50, 67) bedarfsweise abgesperrt wird.

9. Verfahren nach einem der vorherigen Ansprüche, **dadurch gekennzeichnet, dass** der in dem absperrbaren Abschnitt der Vorratsleitung (8.3, 31, 52) des Anhänger-Bremskreises herrschende Luftdruck mittels eines dem Sperrelement (29, 29', 50, 67) in Strömungsrichtung nachgeordneten und an die Vorratsleitung (8.3, 31, 52) oder an einen mit diesem absperrbaren Abschnitt der Vorratsleitung (8.3, 31, 52) verbundenen Vorratsbehälter (9.3, 36, 57) angeschlossenen Drucksensors (30, 51, 68) erfasst wird.

10. Verfahren nach einem der vorherigen Ansprüche, **dadurch gekennzeichnet, dass** die Steuerungsfunktion zum Auffüllen und Absperren zumindest eines Abschnittes der Vorratsleitung (8.3, 31, 52) des Anhänger-Bremskreises bei abgekoppeltem Anhänger deaktiviert wird.

11. Verfahren nach einem der vorherigen Ansprüche, **dadurch gekennzeichnet, dass** unabhängig davon, ob in dem absperrbaren Abschnitt der Vorratsleitung (8.3, 31, 52) des Anhänger-Bremskreises der zulässige Maximaldruck (p_{Br_max}) vorliegt oder nicht, dieser Abschnitt der Vorratsleitung (8.3, 31, 52) immer dann abgesperrt bleibt, wenn der Fahrzeugmotor nicht im Schubbetrieb sondern im Zugbetrieb betrieben wird.

12. Verfahren nach Anspruch 11, **dadurch gekennzeichnet, dass** der zumindest eine absperrbare Abschnitt der Vorratsleitung (8.3, 31, 52) des Anhänger-Bremskreises dann geöffnet wird, wenn dort der zulässige Maximaldruck (p_{Br_max}) unterschritten ist und ein Schubbetrieb des Fahrzeugmotors festgestellt wurde.

13. Verfahren nach Anspruch 11, **dadurch gekennzeichnet, dass** der zumindest eine absperrbare Abschnitt der Vorratsleitung (8.3, 31, 52) des Anhänger-Bremskreises dann geöffnet wird, wenn vergleichsweise kurzfristig der Eintritt eines Schubbetriebes des Fahrzeugmotors zu erwarten ist.

14. Verfahren nach Anspruch 13, **dadurch gekennzeichnet, dass** die Information darüber, ob der Fahrzeugmotor in Kürze von einem Zugbetrieb in einen Schubbetrieb wechselt, aus der Position des Fahrzeugs, aus Streckendaten über den vor dem Fahrzeug liegenden Streckenabschnitt und/oder aus der aktuellen Fahrzeuggeschwindigkeit bestimmt wird.

15. Verfahren nach einem der vorherigen Ansprüche, **dadurch gekennzeichnet, dass** das Sperrelement (29, 29', 50, 67) in dem zumindest einen absperrbaren Abschnitt der Vorratsleitung (8.3, 31, 52) des Anhänger-Bremskreises solange in seiner Schließstellung gehalten und dadurch ein Druckaufbau im Anhänger-Bremskreis und/oder im Handbremskreis verhindert wird, bis in dem zumindest einen Motorwagen-Bremskreis ein für einen sicheren Bremsbetrieb ausreichend hoher Luftdruck aufgebaut wurde.

16. Verfahren nach einem der vorherigen Ansprüche, **dadurch gekennzeichnet, dass** das Sperrelement (29, 29', 50, 67) in dem zumindest einen absperrbaren Abschnitt der Vorratsleitung (8.3, 31, 52) des Anhänger-Bremskreises dann geschlossen wird, wenn ein Druckaufbau im Anhänger-Bremskreis und/oder im Handbremskreis solange verhindert werden soll, bis die Anwesenheit eines Fahrers in dem Motorwagen festgestellt wurde.

17. Vorrichtung zur Steuerung einer Druckluft-Bremsanlage eines Fahrzeuggespanns, das aus einem Motorwagen und zumindest einem Anhänger besteht, mit einer in dem Motorwagen angeordneten Druckluft-Versorgungseinrichtung (1), an die über ein Mehrkreis-Schutzventil (7, 7') zumindest ein nicht druckbegrenzter Motorwagen-Bremskreis und ein druckbegrenzter Anhänger-Bremskreis angeschlossen sind, wobei der Anhänger-Bremskreis im Motorwagen eine zwischen dem betreffenden Anschluss des Mehrkreis-Schutzventils (7, 7') und einem ersten motorwagenseitigen Kupplungskopf (19) angeordnete Vorratsleitung (8.3) mit oder ohne einem Vorratsbehälter (9.3) sowie einen dieser Vorratsleitung (8.3) oder diesem Vorratsbehälter (9.3) nachgeordneten Abzweig (21) zu einem Handbremsventil (23) aufweist, und im Anhänger eine zwischen einem ersten anhängerseitigen Kupplungskopf (32, 53) sowie Betriebsbremszylindern (38.1, 38.2; 59.1 - 59.6) der Radbremsen angeordnete Vorratsleitung (31, 52) mit einem Anhänger-Bremsventil (35, 56) und einem diesem nachgeordneten Vorratsbehälter (36, 57) aufweist, **dadurch gekennzeichnet, dass** zum bedarfsweisen Absperren zumindest eines Abschnittes der Vorratsleitung (8.3, 31, 52) des Anhänger-Bremskreises an einer geeigneten Stelle der Vorratsleitung (8.3, 31, 52) ein ansteuerbares Sperrelement (29, 50, 67) angeordnet ist, das als ein im unbetätigten Zustand geöffnetes, elektrisch ansteuerbares 2/2-Wege-Magnetschaltventil oder als ein im unbetätigten Zustand geöffnetes, über ein Vorschaltventil pneumatisch ansteuerbares 2/2-Wege-Druckschaltventil ausgebildet ist, und dass zur Erfassung des in dem absperrbaren Abschnitt der Vorratsleitung (8.3, 31, 52) herrschenden Luftdruckes ein dem Sperrelement (29, 50, 67) in Strömungsrichtung nachgeordneter Drucksensor (30, 51, 68) an die Vorratsleitung (8.3, 31, 52) oder an den mit dieser Vorratsleitung (8.3, 31, 52) verbundenen Vorratsbehälter (9.3, 36, 57) angeschlossen ist.

18. Vorrichtung nach Anspruch 17, **dadurch gekennzeichnet, dass** das Sperrelement (29) in der Vorratsleitung (8.3) des Motorwagens zwischen dem Vorratsbehälter (9.3) und dem Abzweig (21) zu dem Handbremsventil (23) angeordnet ist.

19. Vorrichtung nach Anspruch 17, **dadurch gekennzeichnet, dass** das Sperrelement (29) in der Vorratsleitung (8.3) des Motorwagens zwischen dem Abzweig (21) zu dem Handbremsventil (23) und dem ersten motorwagenseitigen Kupplungskopf (19) angeordnet ist.

20. Vorrichtung nach Anspruch 18 oder 19, **dadurch gekennzeichnet, dass** der Drucksensor (30) zwischen dem Sperrelement (29) und dem ersten motorwagenseitigen Kupplungskopf (19) an die Vorratsleitung (8.3) des Motorwagens angeschlossen ist.

21. Vorrichtung nach Anspruch 17, **dadurch gekennzeichnet, dass** das Sperrelement (50, 67) in der Vorratsleitung (31, 52) des Anhängers zwischen dem ersten anhängerseitigen Kupplungskopf (32, 53) und dem Anhänger-Bremsventil (35, 56) angeordnet ist.

22. Vorrichtung nach Anspruch 21, **dadurch gekennzeichnet, dass** der Drucksensor (68) zwischen dem Sperrelement (67) und dem Anhänger-Bremsventil (56) an die Vorratsleitung (52) des Anhängers angeschlossen ist.

23. Vorrichtung nach Anspruch 21, **dadurch gekennzeichnet, dass** der Drucksensor (51) zwischen dem Anhänger-Bremsventil (35) und dem Vorratsbehälter (36) an die Vorratsleitung (31) des Anhängers angeschlossen ist.

24. Steuerungsgerät, welches zur Durchführung des Verfahrens gemäß zumindest einem der Verfahrensansprüche bestimmt und ausgebildet ist.

## Claims

1. Method for controlling a compressed air brake system of a vehicle combination, which is composed of a motor vehicle and at least one trailer, having a compressed air supply device (1) which is arranged in the motor vehicle and to which at least one non-pressure-limited motor vehicle brake circuit and a pressure-limited trailer brake circuit are connected via a multi-circuit protective valve (7, 7'), wherein the trailer brake circuit has in the motor vehicle a supply line (8.3) which is arranged between the respective connection of the multi-circuit protective valve (7, 7') and a first coupling head (19) on the motor vehicle side, with or without a reservoir vessel (9.3), and a branch (21), arranged downstream of this supply line (8.3) or this reservoir vessel (9.3) and leading to a handbrake valve (23), and has in the trailer a supply line (31, 52) which is arranged between a first coupling head (32, 53) on the trailer side and service brake cylinders (38.1, 38.2; 59.1 - 59.6) of the wheel brakes and has a trailer brake valve (35, 56) and a reservoir vessel (36, 57) arranged downstream of the latter, **characterized in that** at least one section of the supply line (8.3, 31, 52) of the trailer brake circuit is filled with compressed air up to a previously defined, upper pressure limiting value (p_{Gr_o}) if the compressed air which is necessary for this purpose can be generated in an energetically favourable fashion by the compressed air supply device (1), wherein that operating state of the vehicle-trailer combination in which compressed air can be generated in an energetically favourable fashion by the compressed air supply device (1) is detected by virtue of the fact that the drive engine of the motor vehicle is in the overrun mode, that an engine brake of the drive engine is activated, that a continuous brake of the motor vehicle is switched on and/or that the service brake of the vehicle-trailer combination is activated for longer than a previously defined time period wherein the respective section of the supply line (8.3, 31, 52) is shut off by closing a shut-off element (29, 29', 50, 67) when the air pressure (p_{Br_V}) in this section has reached or exceeded the upper pressure limiting value (p_{Gr_o}), (p_{Br_V} ≥ p_{Gr_o}) wherein the shut-off element (29, 29', 50, 67) is opened, and the respective section of the supply line (8.3, 31, 52) of the trailer brake circuit is filled with compressed air again, at the latest when the air pressure (p_{Br_V}) in this section of the supply line has reached or undershot a previously defined lower pressure limiting value (p_{Gr_u}), (p_{Br_V} ≤ p_{Gr_u}).

2. Method according to Claim 1, **characterized in that** the shut-off element (29, 29', 50, 67) is opened, and the respective section of the supply line (8.3, 31, 52) of the trailer brake circuit is filled with compressed air even if the air pressure (p_{Br_V}) in this section of the supply line (8.3, 31, 52) has dropped below the upper pressure limiting value (p_{Gr_o}) but has not yet reached the lower pressure limiting value (p_{Gr_u}), (p_{Gr_u} < p_{Br_V} < p_{Gr_o}) but compressed air can instantaneously be generated in an energetically favourable fashion by the compressed air supply device (1) .

3. Method according to one of the preceding claims, **characterized in that** the upper pressure limiting value (p_{Gr_o}) corresponds to the maximum pressure prescribed in terms of technical approval for compressed air brake systems, and the lower pressure limiting value (p_{Gr_u}) corresponds to the minimum pressure prescribed in terms of technical approval for compressed air brake systems.

4. Method according to one of the preceding claims, **characterized in that** the entire supply line (8.3, 31, 52) of the trailer brake circuit is shut off as required by closing a shut-off element (29') which is arranged in the assigned part of the multi-circuit protective valve (7').

5. Method according to one of the preceding claims, **characterized in that** a section of the supply line (8.3, 31, 52) of the trailer brake circuit is shut off as required by closing a shut-off element (29) which is arranged in the supply line (8.3) of the motor vehicle, between the assigned connection of the multi-circuit protective valve (7) and the reservoir vessel (9.3).

6. Method according to one of the preceding claims, **characterized in that** a section of the supply line (8.3, 31, 52) of the trailer brake circuit is shut off as required by closing a shut-off element (29) arranged in the supply line (8.3) of the motor vehicle, between the reservoir vessel (9.3) and the branch (21) leading to the handbrake valve (23).

7. Method according to one of the preceding claims, **characterized in that** a section of the supply line (8.3, 31, 52) of the trailer brake circuit is shut off as required by closing a shut-off element (29) which is arranged in the supply line (8.3) of the motor vehicle, between the branch (21), leading to the handbrake valve (23), and the first motor-vehicle-side coupling head (19) .

8. Method according to one of the preceding claims, **characterized in that** a section of the supply line (8.3, 31, 52) of the trailer brake circuit is shut off as required by closing a shut-off element (50, 67) which is arranged in the supply line (31, 52) of the trailer, between the first motor-vehicle-side coupling head (32, 53) and the trailer brake valve (35, 56).

9. Method according to one of the preceding claims, **characterized in that** the prevailing air pressure **in that** section of the supply line (8.3, 31, 52) of the trailer brake circuit which can be shut off is sensed by means of a pressure sensor (30, 51, 68) which is arranged downstream of the shut-off element (29, 29', 50, 67) in the direction of flow and connected to the supply line (8.3, 31, 52) or to a reservoir vessel (9.3, 36, 57) which is connected to this section, which can be shut off, of the supply line (8.3, 31, 52).

10. Method according to one of the preceding claims, **characterized in that** the control function for filling and shutting off at least one section of the supply line (8.3, 31, 52) of the trailer brake circuit is deactivated when the trailer is uncoupled.

11. Method according to one of the preceding claims, **characterized in that**, irrespective of whether the permissible maximum pressure (p_{Br_max}) is present **in that** section of the supply line (8.3, 31, 52) of the trailer brake circuit which can be shut off, this section of the supply line (8.3, 31, 52) remains shut off whenever the engine of the vehicle is not operated in the overrun mode but rather in the traction mode.

12. Method according to Claim 11, **characterized in that** the at least one section, which can be shut off, of the supply line (8.3, 31, 52) of the trailer brake circuit is opened if the permissible maximum pressure (p_{Br_max}) there is undershot and an overrun mode of the vehicle engine has been detected.

13. Method according to Claim 11, **characterized in that** the at least one section, which can be shut off, of the supply line (8.3, 31, 52) of the trailer brake circuit is opened if the occurrence of an overrun mode of the vehicle engine is to be expected in a comparatively short time.

14. Method according to Claim 13, **characterized in that** the information as to whether the vehicle engine will change from a traction mode to an overrun mode in a short time is determined from the position of the vehicle, from route data about the section of route lying ahead of the vehicle and/or from the current speed of the vehicle.

15. Method according to one of the preceding claims, **characterized in that** the shut-off element (29, 29', 50, 67) in the at least one section, which can be shut off, of the supply line (8.3, 31, 52) of the trailer brake circuit is held in its closed position, and as a result a build up of pressure in the trailer brake circuit and/or in the handbrake circuit is prevented, until a high air pressure which is sufficient for a safe braking mode has been built up in the at least one motor vehicle brake circuit.

16. Method according to one of the preceding claims, **characterized in that** the shut-off element (29, 29', 50, 67) in the at least one section, which can be shut off, of the supply line (8.3, 31, 52) of the trailer brake circuit is closed if a build up of pressure in the trailer brake circuit and/or in the handbrake circuit is to be prevented until the presence of a driver in the motor vehicle has been detected.

17. Device for controlling a compressed air brake system of a vehicle combination, which is composed of a motor vehicle and at least one trailer, having a compressed air supply device (1) which is arranged in the motor vehicle and to which at least one non-pressure-limited motor vehicle brake circuit and a pressure-limited trailer brake circuit are connected via a multi-circuit protective valve (7, 7'), wherein the trailer brake circuit has in the motor vehicle a supply line (8.3) which is arranged between the respective connection of the multi-circuit protective valve (7, 7') and a first coupling head (19) on the motor vehicle side, with or without a reservoir vessel (9.3), and a branch (21), arranged downstream of this supply line (8.3) or this reservoir vessel (9.3) and leading to a handbrake valve (23), and has in the trailer a supply line (31, 52) which is arranged between a first coupling head (32, 53) on the trailer side and service brake cylinders (38.1, 38.2; 59.1 - 59.6) of the wheel brakes and has a trailer brake valve (35, 56) and a reservoir vessel (36, 57) arranged downstream of the latter, **characterized in that** in order to shut off, as required, at least one section of the supply line (8.3, 31, 52) of the trailer brake circuit, a shut-off element (29, 50, 67) which can be actuated is arranged at a suitable location on the supply line (8.3, 31, 52), which shut-off element (29, 50, 67) is embodied as a 2/2-way solenoid switching valve which can be actuated electrically and is opened in the non-activated state, or as a 2/2-way pressure switching valve which can be actuated pneumatically by means of a pilot switching valve and is opened in the non-activated state, and **in that**, in order to sense the prevailing air pressure **in that** section of the supply line (8.3, 31, 52) which can be shut off, a pressure sensor (30, 51, 68) which is arranged downstream of the shut-off element (29, 50, 67) in the direction of flow is connected to the supply line (8.3, 31, 52) or to the reservoir vessel (9.3, 36, 57) which is connected to this supply line (8.3, 31, 52).

18. Device according to Claim 17, **characterized in that** the shut-off element (29) in the supply line (8.3) of the motor vehicle is arranged between the reservoir vessel (9.3) and the branch (21) leading to the handbrake valve (23).

19. Device according to Claim 17, **characterized in that** the shut-off element (29) in the supply line (8.3) of the motor vehicle is arranged between the branch (21) leading to the handbrake valve (23) and the first motor-vehicle-side coupling head (19).

20. Device according to Claim 18 or 19, **characterized in that** the pressure sensor (30) between the shut-off element (29) and the first motor-vehicle-side coupling head (19) is connected to the supply line (8.3) of the motor vehicle.

21. Device according to Claim 17, **characterized in that** the shut-off element (50, 67) in the supply line (31, 52) of the trailer is arranged between the first trailer-side coupling head (32, 53) and the trailer brake valve (35, 56).

22. Device according to Claim 21, **characterized in that** the pressure sensor (68) between the shut-off element (67) and the trailer brake valve (56) is connected to the supply line (52) of the trailer.

23. Device according to Claim 21, **characterized in that** the pressure sensor (51) between the trailer brake valve (35) and the reservoir vessel (36) is connected to the supply line (31) of the trailer.

24. Control unit which is intended and designed to carry out the method according to at least one of the method claims.

## Revendications

1. Procédé de commande d'une installation de freinage à air comprimé d'un train de véhicules automobiles, qui se compose d'un véhicule à moteur et d'au moins une remorque, avec un dispositif d'alimentation en air comprimé (1) disposé dans le véhicule à moteur, auquel sont raccordés au moyen d'une soupape de protection à plusieurs circuits (7, 7') au moins un circuit de freinage de véhicule à moteur non limité en pression et un circuit de freinage de remorque limité en pression, dans lequel le circuit de freinage de remorque présente dans le véhicule à moteur une conduite de stockage (8.3) avec ou sans réservoir de stockage (9.3) agencée entre le raccord concerné de la soupape de protection à plusieurs circuits (7, 7') et une première tête de couplage (19) du côté du véhicule à moteur ainsi qu'un branchement (21) vers une soupape de frein à main (23) connecté en aval de cette conduite de stockage (8.3) ou de ce réservoir de stockage (9.3), et dans la remorque une conduite de stockage (31, 52) avec une soupape de frein de remorque (35, 56), agencée entre une première tête de couplage (32, 53) du côté de la remorque ainsi que des cylindres de frein de service (38.1, 38.2; 59.1-59.6) des freins de roue et un réservoir de stockage (36, 57) disposé en aval de cette soupape, **caractérisé en ce qu'**au moins une partie de la conduite de stockage (8.3, 31, 52) du circuit de freinage de remorque est rempli d'air comprimé jusqu'à une valeur limite supérieure de pression fixée au préalable (p_{Gr_o}), dans la mesure où la pression d'air comprimé nécessaire à cet effet peut être produite de façon favorable au point de vue énergétique par le dispositif d'alimentation en air comprimé (1), dans lequel l'état de fonctionnement du train de véhicules automobiles dans lequel de l'air comprimé peut être produit de façon favorable au point de vue énergétique par le dispositif d'alimentation en air comprimé (1) se reconnaît au fait que le moteur d'entraînement du véhicule à moteur se trouve en mode de poussée, qu'un frein moteur du moteur d'entraînement est activé, qu'un freinage permanent du véhicule à moteur est engagé, et/ou que le frein de service du train de véhicules automobiles est actionné plus longtemps que pendant une période de temps définie au préalable, dans lequel la partie concernée de la conduite de stockage (8.3, 31, 52) est fermée par la fermeture d'un élément d'arrêt (29, 29', 50, 67), lorsque la pression d'air (p_{Br_V}) dans cette partie a atteint ou dépassé la valeur limite supérieure de pression (p_{Gr_o}) (p_{Br_V} ≥ p_{Gr_o}), dans lequel l'élément d'arrêt (29, 29', 50, 67) est ouvert et la partie concernée de la conduite de stockage (8.3, 31, 52) du circuit de freinage de remorque est de nouveau remplie d'air comprimé au plus tard lorsque la pression d'air (p_{Br_V}) dans cette partie de la conduite de stockage a atteint ou baissé en dessous d'une valeur limite inférieure de pression définie au préalable (p_{Gr_u}) (p_{Br_V} ≤ p_{Gr_u}).

2. Procédé selon la revendication 1, **caractérisé en ce que** l'élément d'arrêt (29, 29', 50, 67) est également ouvert et la partie concernée de la conduite de stockage (8.3, 31, 52) du circuit de freinage de remorque est remplie d'air comprimé, lorsque la pression d'air (p_{Br_V}) dans cette partie de la conduite de stockage (8.3, 31, 52) a baissé en dessous de la valeur limite supérieure de pression (p_{Gr_o}), mais n'a cependant pas atteint la valeur limite inférieure de pression (p_{Gr_u}) (p_{Gr_u} < p_{Br_V} < p_{Gr_o}), mais que de l'air comprimé peut être produit momentanément de façon favorable au point de vue énergétique par le dispositif d'alimentation en air comprimé (1).

3. Procédé selon l'une quelconque des revendications précédentes, **caractérisé en ce que** la valeur limite supérieure de pression (p_{Gr_o}) correspond à la pression maximale prescrite au niveau de l'homologation pour des installations de freinage à air comprimé et la valeur limite inférieure de pression (p_{Gr_u}) correspond à la pression minimale prescrite au niveau de l'homologation pour des installations de freinage à air comprimé.

4. Procédé selon l'une quelconque des revendications précédentes, **caractérisé en ce que** toute la conduite de stockage (8.3, 31, 52) du circuit de freinage de remorque est au besoin fermée par la fermeture d'un élément d'arrêt (29') disposé dans la partie associée de la soupape de protection à plusieurs circuits (7').

5. Procédé selon l'une quelconque des revendications précédentes, **caractérisé en ce qu'**une partie de la conduite de stockage (8.3, 31, 52) du circuit de freinage de remorque est au besoin fermée par la fermeture d'un élément d'arrêt (29) disposé dans la conduite de stockage (8.3) du véhicule à moteur entre le raccord associé de la soupape de protection à plusieurs circuits (7) et du réservoir de stockage (9.3) .

6. Procédé selon l'une quelconque des revendications précédentes, **caractérisé en ce qu'**une partie de la conduite de stockage (8.3, 31, 52) du circuit de freinage de remorque est au besoin fermée par la fermeture d'un élément d'arrêt (29) disposé dans la conduite de stockage (8.3) du véhicule à moteur entre le réservoir de stockage (9.3) et le branchement (21) vers la soupape de frein à main (23).

7. Procédé selon l'une quelconque des revendications précédentes, **caractérisé en ce qu'**une partie de la conduite de stockage (8.3, 31, 52) du circuit de freinage de remorque est au besoin fermée par la fermeture d'un élément d'arrêt (29) disposé dans la conduite de stockage (8.3) du véhicule à moteur entre le branchement (21) vers la soupape de frein à main (23) et la première tête de couplage (19) du côté du véhicule à moteur.

8. Procédé selon l'une quelconque des revendications précédentes, **caractérisé en ce qu'**une partie de la conduite de stockage (8.3, 31, 52) du circuit de freinage de remorque est au besoin fermée par la fermeture d'un élément d'arrêt (50, 67) disposé dans la conduite de stockage (31, 52) de la remorque entre la première tête de couplage (32, 53) du côté du véhicule à moteur et la soupape de frein de remorque (35, 56).

9. Procédé selon l'une quelconque des revendications précédentes, **caractérisé en ce que** la pression d'air régnant dans la partie pouvant être fermée de la conduite de stockage (8.3, 31, 52) du circuit de freinage de remorque est détectée au moyen d'un capteur de pression (30, 51, 68) disposé en aval de l'élément d'arrêt (29, 29', 50, 67) dans la direction d'écoulement et raccordé à la conduite de stockage (8.3, 31, 52) ou à un réservoir de stockage (9.3, 36, 57) raccordé à cette partie pouvant être fermée de la conduite de stockage (8.3, 31, 52).

10. Procédé selon l'une quelconque des revendications précédentes, **caractérisé en ce que** la fonction de commande pour le remplissage et la fermeture d'au moins une partie de la conduite de stockage (8.3, 31, 52) du circuit de freinage de remorque est désactivée lorsque la remorque est dételée.

11. Procédé selon l'une quelconque des revendications précédentes, **caractérisé en ce que**, indépendamment du fait qu'il se trouve ou non la pression maximale admissible (p_{Br_max}) dans la partie pouvant être fermée de la conduite de stockage (8.3, 31, 52) du circuit de freinage de remorque, cette partie de la conduite de stockage (8.3, 31, 52) reste toujours fermée, lorsque le moteur du véhicule ne fonctionne pas en mode de poussée mais en mode de traction.

12. Procédé selon la revendication 11, **caractérisé en ce que** l'au moins une partie pouvant être fermée de la conduite de stockage (8.3, 31, 52) du circuit de freinage de remorque est ouverte lorsque la pression y est inférieure à la pression maximale admissible (p_{Br_max}) et qu'un fonctionnement en mode de poussée du moteur du véhicule a été constaté.

13. Procédé selon la revendication 11, **caractérisé en ce que** l'au moins une partie pouvant être fermée de la conduite de stockage (8.3, 31, 52) du circuit de freinage de remorque est ouverte, lorsque l'on peut s'attendre à relativement court terme à l'instauration d'un fonctionnement en mode de poussée du moteur du véhicule.

14. Procédé selon la revendication 13, **caractérisé en ce que** l'information selon laquelle le moteur du véhicule va bientôt changer d'un mode de traction à un mode de poussée, est déterminée à partir de la position du véhicule, de données de route sur le trajet se présentant devant le véhicule et/ou de la vitesse actuelle du véhicule.

15. Procédé selon l'une quelconque des revendications précédentes, **caractérisé en ce que** l'élément d'arrêt (29, 29', 50, 67) dans l'au moins une partie pouvant être fermée de la conduite de stockage (8.3, 31, 52) du circuit de freinage de remorque est maintenu dans sa position fermée, et de ce fait une montée de pression dans le circuit de freinage de remorque et/ou dans le circuit de frein à main est empêchée, jusqu'à ce qu'une pression d'air suffisamment élevée pour un fonctionnement de freinage sûr ait été établie dans l'au moins un circuit de freinage de véhicule à moteur.

16. Procédé selon l'une quelconque des revendications précédentes, **caractérisé en ce que** l'élément d'arrêt (29, 29', 50, 67) dans l'au moins une partie pouvant être fermée de la conduite de stockage (8.3, 31, 52) du circuit de freinage de remorque est fermé, lorsqu'une montée de pression dans le circuit de freinage de remorque et/ou dans le circuit de frein à main doit être empêchée, jusqu'à ce que la présence d'un conducteur dans le véhicule à moteur ait été constatée.

17. Dispositif de commande d'une installation de freinage à air comprimé d'un train de véhicules automobiles, qui se compose d'un véhicule à moteur et d'au moins une remorque, avec un dispositif d'alimentation en air comprimé (1) disposé dans le véhicule à moteur, auquel sont raccordés au moyen d'une soupape de protection à plusieurs circuits (7, 7') au moins un circuit de freinage de véhicule à moteur non limité en pression et un circuit de freinage de remorque limité en pression, dans lequel le circuit de freinage de remorque présente dans le véhicule à moteur une conduite de stockage (8.3) avec ou sans réservoir de stockage (9.3) agencée entre le raccord concerné de la soupape de protection à plusieurs circuits (7, 7') et une première tête de couplage (19) du côté du véhicule à moteur ainsi qu'un branchement (21) vers une soupape de frein à main (23) connecté en aval de cette conduite de stockage (8.3) ou de ce réservoir de stockage (9.3), et dans la remorque une conduite de stockage (31, 52) avec une soupape de frein de remorque (35, 56), agencée entre une première tête de couplage (32, 53) du côté de la remorque ainsi que des cylindres de frein de service (38.1, 38.2; 59.1-59.6) des freins de roue et un réservoir de stockage (36, 57) disposé en aval de cette soupape, **caractérisé en ce que**, pour la fermeture au besoin d'au moins une partie de la conduite de stockage (8.3, 31, 52) du circuit de freinage de remorque, un élément d'arrêt réglable (29, 50, 67) est disposé à un endroit approprié de la conduite de stockage (8.3, 31, 52), lequel élément d'arrêt réglable est réalisé sous la forme d'une vanne magnétique à 2/2 voies à commande électrique, ouverte à l'état non actionné, ou sous la forme d'une vanne de commutation de pression à 2/2 voies à commande pneumatique par une vanne pilote, ouverte à l'état non actionné, et **en ce qu'**un capteur de pression (30, 51, 68) disposé en aval de l'élément d'arrêt (29, 50, 67) dans la direction d'écoulement est raccordé à la conduite de stockage (8.3, 31, 52) ou à un réservoir de stockage (9.3, 36, 57) relié à cette conduite de stockage (8.3, 31, 52) pour la détection de la pression d'air régnant dans la partie pouvant être fermée de la conduite de stockage (8.3, 31, 52).

18. Dispositif selon la revendication 17, **caractérisé en ce que** l'élément d'arrêt (29) est disposé dans la conduite de stockage (8.3) du véhicule à moteur entre le réservoir de stockage (9.3) et le branchement (21) vers la soupape de frein à main (23).

19. Dispositif selon la revendication 17, **caractérisé en ce que** l'élément d'arrêt (29) est disposé dans la conduite de stockage (8.3) du véhicule à moteur entre le branchement (21) vers la soupape de frein à main (23) et la première tête de couplage (19) du côté du véhicule à moteur.

20. Dispositif selon la revendication 18 ou 19, **caractérisé en ce que** le capteur de pression (30) est raccordé à la conduite de stockage (8.3) du véhicule à moteur entre l'élément d'arrêt (29) et la première tête de couplage (19) du côté du véhicule à moteur.

21. Dispositif selon la revendication 17, **caractérisé en ce que** l'élément d'arrêt (50, 67) est disposé dans la conduite de stockage (31, 52) de la remorque entre la première tête de couplage (32, 53) du côté de la remorque et la soupape de frein de remorque (35, 56).

22. Dispositif selon la revendication 21, **caractérisé en ce que** le capteur de pression (68) est raccordé à la conduite de stockage (52) de la remorque entre l'élément d'arrêt (67) et la soupape de frein de remorque (56).

23. Dispositif selon la revendication 21, **caractérisé en ce que** le capteur de pression (51) est raccordé à la conduite de stockage (31) de la remorque entre la soupape de frein de remorque (35) et le réservoir de stockage (36).

24. Appareil de commande, qui est destiné à et conçu pour la mise en oeuvre du procédé selon au moins une des revendications de procédé.
